# EUROPÄISCHE PATENTSCHRIFT

(11) **EP 3 463 708 B1**
(45) Veröffentlichungstag und Bekanntmachung des Hinweises auf die Patenterteilung: **22.04.2020**
(21) Anmeldenummer: 17739178.6
(22) Anmeldetag: 24.05.2017
(51) Int. Cl.: B21D 5/02, B21D 37/14

(54) **WERKZEUG-SPEICHERSYSTEM, FERTIGUNGSANLAGE SOWIE VERFAHREN ZUM MANIPULIEREN MIT EINEM DERARTIGEN WERKZEUG-SPEICHERSYSTEM**
TOOL STORAGE SYSTEM, PRODUCTION PLANT AND METHOD FOR MANIPULATING WITH SUCH A TOOL STORAGE SYSTEM
SYSTÈME DE STOCKAGE D'OUTILS, INSTALLATION DE FABRICATION ET PROCÉDÉ DE MANIPULATION COMPRENANT UN SYSTÈME DE STOCKAGE D'OUTILS DE CE TYPE

(30) Priorität: 25.05.2016 AT 504742016
(43) Veröffentlichungstag der Anmeldung: 10.04.2019
(73) Patentinhaber: TRUMPF Maschinen Austria GmbH & Co. KG., 4061 Pasching (AT)
(72) Erfinder: CAVICCHIA, Luigi, 10028 Trofarello (TO) (IT); TOMASIN, Fabio, 10098 Rivoli (TO) (IT); TONDA ROCH, Andrea, 10141 Torino (IT); VERONESE, Roberto, 10023 Chieri (TO) (IT); VIDOTTO, Giovanni, 10023 Chieri (TO) (IT)
(74) Vertreter: Burger, Hannes
(86) Internationale Anmeldenummer: PCT/AT2017/060137
(87) Internationale Veröffentlichungsnummer: WO 2017/201559

(56) Entgegenhaltungen:
- EP-A1- 0 308 363
- EP-A1- 2 865 458
- WO-A1-2015/077810

## Beschreibung

Die Erfindung betrifft ein Werkzeug-Speichersystem für eine Fertigungsanlage, insbesondere zum Freiformbiegen von Werkstücken aus einem Blech mittels einer Biegepresse, eine Fertigungsanlage zum Freiformbiegen von Werkstücken aus einem Blech mit einem derartigen Werkzeug-Speichersystem sowie ein Verfahren zum Manipulieren zumindest eines Biegewerkzeugs in einem Werkzeug-Speichersystem einer Fertigungsanlage.

Die WO 2015/077810 A1 beschreibt ein gattungsgemäß ausgebildetes Werkzeug-Speichersystem für eine Fertigungsanlage zum Freiformbiegen von Werkstücken aus einem Blech mittels einer Biegepresse. Das Werkzeug-Speichersystem umfasst einen Werkzeugspeicher, zumindest eine Werkzeug-Manipulationseinheit und zumindest eine Bereitstellungseinheit mit zumindest einer oberen Bereitstellungsschiene und/oder einer unteren Bereitstellungsschiene. Der Werkzeugspeicher dient zur Aufnahme zumindest eines Biegewerkzeugs, wobei das Biegewerkzeug zumindest einen Biegestempel und zumindest ein Biegegesenk aufweist. Der Werkzeugspeicher umfasst seinerseits zumindest eine obere Speicherschiene und zumindest eine untere Speicherschiene. Die zumindest eine obere Speicherschiene und die zumindest eine untere Speicherschiene sind in einem Vertikalabstand voneinander distanziert sowie ortsfest zueinander angeordnet. Weiters definiert die zumindest eine obere Speicherschiene eine obere Speicherebene und die zumindest eine untere Speicherschiene definiert ihrerseits eine untere Speicherebene. Die Werkzeug-Manipulationseinheit weist ihrerseits eine obere Werkzeug-Manipulationsvorrichtung und eine untere Werkzeug-Manipulationsvorrichtung auf.

Aus der WO 2012/151601 A1 ist eine Fertigungsanlage für das Freiformbiegen von Werkstücken aus einem Blech bekannt geworden, bei welcher hinterhalb der Biegepresse mit ihren Biegebalken ein Werkzeugspeicher für unterschiedliche Biegewerkzeuge angeordnet ist. Die Biegestempel des Biegewerkzeugs sind hängend und die Biegegesenke sind in stehender Lage, wie auch in deren Einsatzstellung gehalten. Für den Werkzeugwechsel ist zumindest eine Hinteranschlageinheit vorgesehen, welche einen um eine Vertikalachse schwenkbaren Träger aufweist, welcher an einem Ende einen Hinteranschlag und am anderen Ende eine Manipulationsvorrichtung für den Werkzeugwechsel aufweist. Durch die kombinierte Verfahr- und Schwenkbewegung des Trägers können jeweils einzelne Komponenten des nicht mehr benötigten Biegewerkzeugs gegen aktuell benötigte Komponenten ausgetauscht werden. Der Werkzeug-Wechselvorgang ist dabei eher langwierig und es ist über eine längere Zeitdauer kein Biegevorgang möglich.

Weitere bekannte Werkzeugspeicher können durch ein Paternoster-System gebildet sein, bei welchen die jeweilige Werkzeugkomponente zur Übergabeposition an eine Manipulationsvorrichtung verbracht wird und dort von dieser entweder die Übernahme oder Rückgabe der Werkzeugkomponente erfolgt. Auch hier ist ein länger andauernder Werkzeug-Wechselvorgang notwendig, um einen Tausch vornehmen zu können. Damit kann auch hier über einen längeren Zeitraum kein Biegevorgang durchgeführt werden.

Aufgabe der vorliegenden Erfindung war es, die Nachteile des Standes der Technik zu überwinden und eine Vorrichtung, eine Anlage sowie ein Verfahren zur Verfügung zu stellen, mittels derer eine einfache und vor allem raschere Beschickung sowie ein rascher Wechsel von Biegewerkzeugen vorgenommen werden kann.

Diese Aufgabe wird durch ein Werkzeug-Speichersystem gemäß den Ansprüchen gelöst.

Das erfindungsgemäße ausgebildete Werkzeug-Speichersystem wird bei einer Fertigungsanlage, insbesondere zum Freiformbiegen von Werkstücken aus einem Blech mittels einer Biegepresse, eingesetzt und umfasst
- zumindest einen Werkzeugspeicher zur Aufnahme zumindest eines Biegewerkzeugs, wobei das Biegewerkzeug zumindest einen Biegestempel und zumindest ein Biegegesenk aufweist,
- wobei der Werkzeugspeicher zumindest eine obere Speicherschiene und zumindest eine untere Speicherschiene umfasst, welche zumindest eine obere Speicherschiene und zumindest eine untere Speicherschiene in einem Vertikalabstand voneinander distanziert sowie ortsfest zueinander angeordnet sind, und dabei die zumindest eine obere Speicherschiene eine obere Speicherebene und die zumindest eine untere Speicherschiene eine untere Speicherebene definiert,
- zumindest eine Werkzeug-Manipulationseinheit,
- wobei die Werkzeug-Manipulationseinheit zumindest eine obere Werkzeug-Manipulationsvorrichtung und zumindest eine untere Werkzeug-Manipulationsvorrichtung aufweist,
- zumindest eine Bereitstellungseinheit mit zumindest einer oberen und/oder unteren Bereitstellungsschiene, wobei weiters vorgesehen ist
- dass die zumindest eine obere Werkzeug-Manipulationsvorrichtung im Bereich einer Stirnseite der zumindest einen oberen Speicherschiene und die zumindest eine untere Werkzeug-Manipulationsvorrichtung im Bereich einer Stirnseite der zumindest einen unteren Speicherschiene angeordnet ist,
- dass die zumindest eine obere Werkzeug-Manipulationsvorrichtung zumindest eine obere Arbeitsschiene und zumindest eine seitlich dazu angeordnete, parallel bezüglich der oberen Arbeitsschiene verlaufende obere Hilfsschiene aufweist, und weiters zumindest eine obere Einziehvorrichtung für zumindest einen aufzunehmenden Biegestempel sowie zumindest eine obere Ausschiebevorrichtung für zumindest einen abzugebenden Biegestempel umfasst,
- dass die zumindest eine untere Werkzeug-Manipulationsvorrichtung zumindest eine untere Arbeitsschiene und zumindest eine seitlich dazu angeordnete, parallel bezüglich der unteren Arbeitsschiene verlaufende untere Hilfsschiene aufweist, und weiters zumindest eine untere Einziehvorrichtung für zumindest ein aufzunehmendes Biegegesenk sowie zumindest eine untere Ausschiebevorrichtung für zumindest ein abzugebendes Biegegesenk umfasst,
- dass die zumindest eine obere Werkzeug-Manipulationsvorrichtung parallel bezüglich der oberen Speicherebene sowie in senkrechter Richtung bezüglich der Längserstreckung der zumindest einen oberen Speicherschiene entlang einer oberen Längsführungsanordnung verfahrbar ist, und
- dass die zumindest eine untere Werkzeug-Manipulationsvorrichtung parallel bezüglich der unteren Speicherebene sowie in senkrechter Richtung bezüglich der Längserstreckung der zumindest einen unteren Speicherschiene entlang einer unteren Längsführungsanordnung verfahrbar ist.

Der dadurch erzielte Vorteil liegt darin, dass durch die ortsfest positioniert angeordneten und in vertikaler Richtung voneinander distanziert angeordneten unteren und oberen Speicherschienen jeweils eine exakte Speicherebene von den Schienen definiert wird. Weiters können durch die bevorzugt parallel bezüglich der Pressbalken sowie der daran angeordneten Werkzeugaufnahmen verlaufende Ausrichtung der einzelnen Schienen des Werkzeugspeichers mit einer einfachen geradlinigen Bewegungsrichtung alle Umlagerungsvorgänge der einzelnen Komponenten des Biegewerkzeugs durchgeführt werden. Da weiters jeder der Speicherebenen der Speicherschienen eine eigene Werkzeug-Manipulationsvorrichtung für die Umlagerungsvorgänge oder Bereitstellungsvorgänge zugeordnet ist, kann eine noch höhere Flexibilität sowie raschere und voneinander unabhängige Bereitstellung erreicht und damit ein rascherer Wechsel von Biegewerkzeugen durchgeführt werden. Weiters können durch das Vorsehen von unabhängig voneinander betätigbaren Vorrichtungen zum Einziehen von Komponenten des Biegewerkzeugs auf die jeweilige Werkzeug-Manipulationsvorrichtung sowie zum Ausschieben derselben von der jeweiligen Werkzeug-Manipulationsvorrichtung so einfach und vor allem rasch durchzuführende Umlagerungszeiten erreicht werden.

Weiters kann es vorteilhaft sein, wenn mehrere obere Speicherschienen sowie mehrere untere Speicherschienen vorgesehen sind, und die oberen Speicherschienen sowie die unteren Speicherschienen in jeder der Speicherebenen parallel zueinander verlaufend ausgerichtet sind, wobei die beiden von den jeweiligen Speicherschienen definierten Speicherebenen jeweils eine horizontale Ausrichtung aufweisen. Durch das Vorsehen einer Vielzahl von oberen Speicherschienen sowie einer Vielzahl von unteren Speicherschienen kann die Lagerkapazität des Werkzeugspeichers entsprechend den Anforderungen angepasst werden. Weiters kann durch die exakte und vor allem feststehende Ausrichtung der einzelnen Speicherschienen in jeder der Speicherebenen mit einer einfacheren Verfahrbewegung sowie Positionierung der jeweiligen Werkzeug-Manipulationsvorrichtung in Bezug auf die jeweilige Speicherschiene die Übergabe- oder Übernahmeposition exakt angefahren werden.

Eine andere Ausführungsform zeichnet sich dadurch aus, dass die obere Längsführungsanordnung zumindest eine erste obere Führungsbahn sowie zumindest eine zweite obere Führungsbahn aufweist. Durch das Aufteilen der Längsführungsanordnung in zumindest zwei Führungsbahnen kann so eine bessere Abstützwirkung für die Verfahrbewegung erzielt werden und darüber hinaus für jede der Werkzeug-Manipulationsvorrichtungen eine noch höhere Flexibilität erreicht werden.

Eine weitere mögliche Ausführungsform hat die Merkmale, dass die zumindest eine obere Arbeitsschiene und die zumindest eine obere Hilfsschiene der oberen Werkzeug-Manipulationsvorrichtung eine obere Baueinheit bilden und die obere Baueinheit an der zumindest einen ersten oberen Führungsbahn der oberen Längsführungsanordnung mittels eines Antriebes verfahrbar ist. Durch das Ausbilden einer zusammengehörigen Baueinheit in Verbindung mit den jeweils eigenen Führungsbahnen kann so eine von der Einziehvorrichtung unabhängige Verfahrbewegung dieser eigenen Baueinheit ermöglicht werden.

Eine weitere Ausbildung sieht vor, dass die obere Einziehvorrichtung der oberen Werkzeug-Manipulationsvorrichtung an der zumindest einen zweiten oberen Führungsbahn der oberen Längsführungsanordnung verfahrbar ist. Durch die getrennte Führung bzw. Lagerung der Einziehvorrichtung von der jeweiligen Baueinheit kann so eine relative Verlagerung von Einzelkomponenten der jeweiligen Werkzeug-Manipulationsvorrichtung zueinander ermöglicht werden. Weiters kann damit aber auch eine Mehrfachanordnung bzw. ein mehrfaches Vorsehen von Einzelkomponenten der jeweiligen Werkzeug-Manipulationsvorrichtung vermieden werden.

Eine andere Ausführungsform zeichnet sich dadurch aus, dass zwischen der oberen Baueinheit und der oberen Einziehvorrichtung zumindest eine obere Kopplungsvorrichtung vorgesehen ist. Durch das Vorsehen einer eigenen Kopplungsvorrichtung kann so eine gemeinsame Verfahrbewegung der Baueinheit, welche zur Aufnahme von Komponenten des Biegewerkzeugs dient, sowie der dieser zugeordneten Einziehvorrichtung ermöglicht werden. Durch das Entkoppeln der Kopplungsvorrichtung kann insbesondere für die Baueinheit eine von der Einziehvorrichtung unabhängige Verfahrbewegung ermöglicht werden.

Eine weitere bevorzugte Ausführungsform ist dadurch gekennzeichnet, dass die obere Einziehvorrichtung zumindest ein oberes Arretiermittel aufweist und die obere Einziehvorrichtung bei dem sich in einer Arretierstellung befindlichen zumindest einen oberen Arretiermittel relativ bezüglich der zumindest einen zweiten oberen Führungsbahn der oberen Längsführungsanordnung ortsfest positioniert gehalten ist. Befindet sich das Arretiermittel in seiner Arretierstellung, kann so eine ortsfeste Positionierung der Einziehvorrichtung relativ bezüglich der zweiten Führungsbahn ermöglicht werden. Damit kann bei entkoppelter Kopplungsvorrichtung sichergestellt werden, dass die Einziehvorrichtung exakt positioniert bezüglich einer der Speicherschienen oder einer der Bereitstellungsschienen gehalten ist und wahlweise entweder die Arbeitsschiene oder die Hilfsschiene in fluchtender Ausrichtung zu einer der Speicherschienen oder einer der Bereitstellungsschienen verbracht werden kann.

Weiters kann es vorteilhaft sein, wenn die zumindest eine obere Ausschiebevorrichtung an der oberen Baueinheit angeordnet ist und ein in Richtung der Längserstreckung der zumindest einen oberen Arbeitsschiene sowie der zumindest einen oberen Hilfsschiene verlagerbares oberes Gleitstück aufweist und am oberen Gleitstück zumindest ein Stellfinger angeordnet ist, welcher zumindest eine Stellfinger von einer mit dem zumindest einen Biegestempel in Eingriff befindlichen Arbeitsstellung in eine mit dem zumindest einen Biegestempel außer Eingriff befindliche Ruhestellung verstellbar ist. So kann mittels der Ausschiebevorrichtung unabhängig von der Einziehvorrichtung eine Abgabe bzw. ein Ausschieben von Komponenten des Biegewerkzeugs je nach Betätigung und dem damit verbundenen in Eingriff bringen des Stellfingers mit dem Biegestempel ermöglicht werden.

Eine andere alternative Ausführungsform zeichnet sich dadurch aus, dass ein oberer Schieber an der oberen Baueinheit in paralleler Richtung bezüglich der zumindest einen oberen Arbeitsschiene geführt gelagert ist, welcher obere Schieber von einer die obere Baueinheit in Richtung auf den Werkzeugspeicher überragenden Ausfahrstellung in eine sich innerhalb der oberen Baueinheit befindliche Ruhestellung verstellbar ist. Durch das Vorsehen eines zusätzlichen Schiebers an der Baueinheit kann damit eine zusätzliche Verlagerungsbewegung von einzelnen Komponenten des Biegewerkzeugs entweder im Bereich der Bereitstellungseinheit oder im Bereich des Werkzeugspeichers ermöglicht werden.

Eine weitere mögliche und gegebenenfalls alternative Ausführungsform hat die Merkmale, dass ein erstes oberes Kupplungselement am oberen Gleitstück angeordnet ist, welches erste obere Kupplungselement mit einem am oberen Schieber angeordneten, zweiten oberen Kupplungselement in eine in Eingriff befindliche Kupplungsstellung bringbar ist. Durch das Vorsehen eines zusätzlichen Kupplungselements am Gleitstück kann damit für die Antriebsbewegung des Schiebers auf eine zusätzliche Antriebsvorrichtung verzichtet werden. Damit kann mit wenigen Bauteilen das Auslangen gefunden werden und trotzdem eine Längsverstellung des Schiebers relativ bezüglich der Baueinheit ermöglicht werden.

Eine weitere Ausbildung sieht vor, dass zumindest ein oberes Stellmittel, insbesondere ein Antriebsrad, Zwischenrad, Losrad oder Leitrad, an der zumindest einen oberen Arbeitsschiene und/oder der zumindest einen oberen Hilfsschiene angeordnet ist, und dass das zumindest eine obere Stellmittel in einem dem Werkzeugspeicher zugewendeten Endbereich der zumindest einen oberen Arbeitsschiene und/oder der zumindest einen oberen Hilfsschiene angeordnet ist. Durch Betätigung des Stellmittels kann so ein Vorragen bzw. Überragen von Komponenten des an der Baueinheit aufgenommenen Biegewerkzeugs vermieden werden. Damit können Kollisionen von Teilen des Biegewerkzeugs bei einer Verfahrbewegung entlang des Werkzeugspeichers mit den dort angeordneten Speicherschienen oder im Bereich der Bereitstellungsschiene vermieden werden.

Eine andere Ausführungsform zeichnet sich dadurch aus, dass die unter Längsführungsanordnung zumindest eine erste untere Führungsbahn sowie zumindest eine zweite untere Führungsbahn aufweist. Durch das Aufteilen der Längsführungsanordnung in zumindest zwei Führungsbahnen kann so eine bessere Abstützwirkung für die Verfahrbewegung erzielt werden und darüber hinaus für jede der Werkzeug-Manipulationsvorrichtungen eine noch höhere Flexibilität erreicht werden.

Eine weitere bevorzugte Ausführungsform ist dadurch gekennzeichnet, dass die zumindest eine untere Arbeitsschiene und die zumindest eine untere Hilfsschiene der unteren Werkzeug-Manipulationsvorrichtungen eine untere Baueinheit bilden und die untere Baueinheit an der zumindest einen ersten unteren Führungsbahn der unteren Längsführungsanordnung mittels eines Antriebes verfahrbar ist. Durch das Ausbilden einer zusammengehörigen Baueinheit in Verbindung mit den jeweils eigenen Führungsbahnen kann so eine von der Einziehvorrichtung unabhängige Verfahrbewegung dieser eigenen Baueinheit ermöglicht werden.

Weiters kann es vorteilhaft sein, wenn die untere Einziehvorrichtung der unteren Werkzeug-Manipulationsvorrichtung an der zumindest einen zweiten unteren Führungsbahn der unteren Längsführungsanordnung verfahrbar ist. Durch die getrennte Führung bzw. Lagerung der Einziehvorrichtung von der jeweiligen Baueinheit kann so eine relative Verlagerung von Einzelkomponenten der jeweiligen Werkzeug-Manipulationsvorrichtung zueinander ermöglicht werden. Weiters kann damit aber auch eine Mehrfachanordnung bzw. ein mehrfaches Vorsehen von Einzelkomponenten der jeweiligen Werkzeug-Manipulationsvorrichtung vermieden werden.

Eine andere Ausführungsform zeichnet sich dadurch aus, dass zwischen der unteren Baueinheit und der unteren Einziehvorrichtung zumindest eine untere Kopplungsvorrichtung vorgesehen ist. Durch das Vorsehen einer eigenen Kopplungsvorrichtung kann so eine gemeinsame Verfahrbewegung der Baueinheit, welche zur Aufnahme von Komponenten des Biegewerkzeugs dient, sowie der dieser zugeordneten Einziehvorrichtung ermöglicht werden. Durch das Entkoppeln der Kopplungsvorrichtung kann insbesondere für die Baueinheit eine von der Einziehvorrichtung unabhängige Verfahrbewegung ermöglicht werden.

Eine weitere mögliche Ausführungsform hat die Merkmale, dass die untere Einziehvorrichtung zumindest ein unteres Arretiermittel aufweist und die untere Einziehvorrichtung bei dem sich in einer Arretierstellung befindlichen zumindest einen unteren Arretiermittel relativ bezüglich der zumindest einen zweiten unteren Führungsbahn der unteren Längsführungsanordnung ortsfest positioniert gehalten ist. Befindet sich das Arretiermittel in seiner Arretierstellung, kann so eine ortsfeste Positionierung der Einziehvorrichtung relativ bezüglich der zweiten Führungsbahn ermöglicht werden. Damit kann bei entkoppelter Kopplungsvorrichtung sichergestellt werden, dass die Einziehvorrichtung exakt positioniert bezüglich einer der Speicherschienen oder einer der Bereitstellungsschienen gehalten ist und wahlweise entweder die Arbeitsschiene oder die Hilfsschiene in fluchtender Ausrichtung zu einer der Speicherschienen oder einer der Bereitstellungsschienen verbracht werden kann.

Eine weitere Ausbildung sieht vor, dass die zumindest eine untere Ausschiebevorrichtung an der unteren Baueinheit angeordnet ist und ein in Richtung der Längserstreckung der zumindest einen unteren Arbeitsschiene sowie der zumindest einen unteren Hilfsschiene verlagerbares unteres Gleitstück aufweist und am unteren Gleitstück zumindest ein Stellfinger angeordnet ist, welcher zumindest eine Stellfinger von einer mit dem zumindest einen Biegegesenk in Eingriff befindlichen Arbeitsstellung in eine mit dem zumindest einen Biegegesenk außer Eingriff befindliche Ruhestellung verstellbar ist. So kann mittels der Ausschiebevorrichtung unabhängig von der Einziehvorrichtung eine Abgabe bzw. ein Ausschieben von Komponenten des Biegewerkzeugs je nach Betätigung und dem damit verbundenen in Eingriff bringen des Stellfingers mit dem Biegegesenk ermöglicht werden.

Eine andere Ausführungsform zeichnet sich dadurch aus, dass ein unterer Schieber an der unteren Baueinheit in paralleler Richtung bezüglich der zumindest einen unteren Arbeitsschiene geführt gelagert ist, welcher untere Schieber von einer die untere Baueinheit in Richtung auf den Werkzeugspeicher überragenden Ausfahrstellung in eine sich innerhalb der unteren Baueinheit befindliche Ruhestellung verstellbar ist. Durch das Vorsehen eines zusätzlichen Schiebers an der Baueinheit kann damit eine zusätzliche Verlagerungsbewegung von einzelnen Komponenten des Biegewerkzeugs entweder im Bereich der Bereitstellungseinheit oder im Bereich des Werkzeugspeichers ermöglicht werden.

Eine weitere bevorzugte Ausführungsform ist dadurch gekennzeichnet, dass ein erstes unteres Kupplungselement am unteren Gleitstück angeordnet ist, welches erste untere Kupplungselement mit einem am unteren Schieber angeordneten, zweiten unteren Kupplungselement in eine in Eingriff befindliche Kupplungsstellung bringbar ist. Durch das Vorsehen eines zusätzlichen Kupplungselements am Gleitstück kann damit für die Antriebsbewegung des Schiebers auf eine zusätzliche Antriebsvorrichtung verzichtet werden. Damit kann mit wenigen Bauteilen das Auslangen gefunden werden und trotzdem eine Längsverstellung des Schiebers relativ bezüglich der Baueinheit ermöglicht werden.

Weiters kann es vorteilhaft sein, wenn zumindest ein unteres Stellmittel, insbesondere ein Antriebsrad, Zwischenrad, Losrad oder Leitrad, an der zumindest einen unteren Arbeitsschiene und/oder der zumindest einen unteren Hilfsschiene angeordnet ist, und dass das zumindest eine untere Stellmittel in einem dem Werkzeugspeicher zugewendeten Endbereich der zumindest einen unteren Arbeitsschiene und/oder der zumindest einen unteren Hilfsschiene angeordnet ist. Durch Betätigung des Stellmittels kann so ein Vorragen bzw. Überragen von Komponenten des an der Baueinheit aufgenommenen Biegewerkzeugs vermieden werden. Damit können Kollisionen von Teilen des Biegewerkzeugs bei einer Verfahrbewegung entlang des Werkzeugspeichers mit den dort angeordneten Speicherschienen oder im Bereich der Bereitstellungsschiene vermieden werden.

Weiters wird die Aufgabe der Erfindung auch noch durch eine Fertigungsanlage zum Freiformbiegen von Werkstücken aus einem Blech gelöst. Dabei umfasst die Fertigungsanlage folgende Anlagenteile:
- zumindest eine Biegepresse,
- ein Werkzeug-Speichersystem, welches zumindest einen Werkzeugspeicher zur Aufnahme zumindest eines Biegewerkzeugs sowie zumindest eine Werkzeug-Manipulationseinheit aufweist.

Die Aufgabe der Erfindung wird auch noch durch ein Verfahren zum Manipulieren zumindest eines Biegewerkzeugs in einem Werkzeug-Speichersystem einer Fertigungsanlage, insbesondere zum Freiformbiegen von Werkstücken aus einem Blech mittels einer Biegepresse, gelöst. Dabei wird zumindest ein Werkzeugspeicher zur Aufnahme des zumindest einen Biegewerkzeugs umfassend zumindest einen Biegestempel und zumindest ein Biegegesenk vorgesehen. Der Werkzeugspeicher wird von zumindest einer oberen Speicherschiene und zumindest einer unteren Speicherschiene gebildet, wobei die zumindest eine obere Speicherschiene und die zumindest eine untere Speicherschiene in einem Vertikalabstand voneinander distanziert sowie ortsfest zueinander angeordnet werden, und wobei von der zumindest einen oberen Speicherschiene eine obere Speicherebene und von der zumindest einen unteren Speicherschiene eine untere Speicherebene definiert wird. Das zumindest eine Biegewerkzeug wird mittels zumindest einer Werkzeug-Manipulationseinheit zwischen dem zumindest ein Werkzeugspeicher und zumindest einer Bereitstellungseinheit mit zumindest einer oberen und/oder unteren Bereitstellungsschiene manipuliert, wobei die Werkzeug-Manipulationseinheit von zumindest einer oberen Werkzeug-Manipulationsvorrichtung und von zumindest einer unteren Werkzeug-Manipulationsvorrichtung gebildet wird. Dabei wird derart vorgegangen, dass
- die zumindest eine obere Werkzeug-Manipulationsvorrichtung im Bereich einer Stirnseite der zumindest einen oberen Speicherschiene und die zumindest eine untere Werkzeug-Manipulationsvorrichtung im Bereich einer Stirnseite der zumindest einen unteren Speicherschiene angeordnet wird,
- die zumindest eine obere Werkzeug-Manipulationsvorrichtung von zumindest einer oberen Arbeitsschiene und von zumindest einer seitlich dazu angeordneten, parallel bezüglich der oberen Arbeitsschiene verlaufenden oberen Hilfsschiene gebildet wird, und die obere Werkzeug-Manipulationsvorrichtung weiters zumindest eine obere Einziehvorrichtung für zumindest einen aufzunehmenden Biegestempel sowie zumindest eine obere Ausschiebevorrichtung für zumindest einen abzugebenden Biegestempel umfasst,
- die zumindest eine untere Werkzeug-Manipulationsvorrichtung von zumindest einer unteren Arbeitsschiene und von zumindest einer seitlich dazu angeordneten, parallel bezügl ich der unteren Arbeitsschiene verlaufenden unteren Hilfsschiene gebildet wird, und die untere Werkzeug-Manipulationsvorrichtung weiters zumindest eine untere Einziehvorrichtung für zumindest ein aufzunehmendes Biegegesenk sowie zumindest eine untere Ausschiebevorrichtung für zumindest ein abzugebendes Biegegesenk umfasst,
- die zumindest eine obere Werkzeug-Manipulationsvorrichtung parallel bezüglich der oberen Speicherebene sowie in senkrechter Richtung bezüglich der Längserstreckung der zumindest einen oberen Speicherschiene entlang einer oberen Längsführungsanordnung verfahren werden kann,
- die zumindest eine untere Werkzeug-Manipulationsvorrichtung parallel bezüglich der unteren Speicherebene sowie in senkrechter Richtung bezüglich der Längserstreckung der zumindest einen unteren Speicherschiene entlang einer unteren Längsführungsanordnung verfahren werden kann,

- das Zusammenstellen eines Biegewerkzeugs aus mehreren Biegestempeln und mehreren Biegegesenken jeweils mittels der Werkzeug-Manipulationsvorrichtungen unabhängig voneinander durchgeführt wird,
- mittels der zumindest einen oberen Werkzeug-Manipulationsvorrichtung von einer der oberen Speicherschienen zumindest einer der benötigten und ausgewählten Biegestempel auf seine zumindest eine obere Arbeitsschiene verlagert wird, wobei zumindest ein nicht benötigter Biegestempel von derselben oberen Speicherschiene mittels der zumindest einen oberen Werkzeug-Manipulationsvorrichtung auf seine zumindest eine obere Hilfsschiene verlagert wird,
- und/oder mittels der zumindest einen unteren Werkzeug-Manipulationsvorrichtung von einer der unteren Speicherschienen zumindest eines der benötigten und ausgewählten Biegegesenke auf seine zumindest eine untere Arbeitsschiene verlagert wird, wobei zumindest ein nicht benötigtes Biegegesenk von derselben unteren Speicherschiene mittels der zumindest einen unteren Werkzeug-Manipulationsvorrichtung auf seine zumindest eine untere Hilfsschiene verlagert wird.

Vorteilhaft ist dabei, dass damit in jeder der Speicherebenen unabhängig voneinander mittels der Werkzeug-Manipulationsvorrichtungen die jeweils benötigten Biegestempel oder Biegegesenke entnommen werden können. Je nach Anordnung und Speicherort der Biegestempel oder Biegegesenke ist auf die entsprechende Reihenfolge bei der Zusammenstellung bzw. Konfigurierung der benötigten Biegestempel sowie der Biegegesenke bei jeder der Werkzeug-Manipulationsvorrichtungen zu achten. Zumeist befindet bzw. befinden sich jener oder jene Biegestempel oder Biegegesenke nicht im unmittelbaren Übernahmebereich und somit randseitig im Werkzeugspeicher, insbesondere in der oder den Speicherschienen, sondern an einem davon distanzierten Speicherort. Damit ist zwischen dem oder den für die Bildung des Biegewerkzeugs benötigten Biegestempel oder Biegegesenk und der jeweiligen Werkzeug-Manipulationsvorrichtung in Entnahmerichtung zumindest ein nicht benötigter Biegestempel oder zumindest ein nicht benötigtes Biegegesenk vorhanden.

Die jeweils benötigten Biegestempel sowie Biegegesenke sollen in der korrekten Reihenfolge für die spätere Bereitstellung jeweils auf die dafür vorgesehene Arbeitsschiene verlagert werden. Sollten sich auf der gleichen Speicherschiene momentan nicht benötigte Biegestempel oder Biegegesenke befinden, wird die jeweilige Hilfsschiene der jeweiligen Werkzeug-Manipulationsvorrichtung in eine bezüglich der Speicherschiene ausgerichtete Übernahmeposition verbracht. So kann der oder die momentan nicht benötigten Biegestempel oder Biegegesenke auf der entsprechenden Hilfsschiene zwischengespeichert werden. Durch die unmittelbare nebeneinander Anordnung von Arbeitsschiene und Hilfsschiene bei jeder der Werkzeug-Manipulationsvorrichtungen können so die Verfahrwege derselben sehr kurz gehalten werden. Damit kann die Zeitdauer der Manipulation für die Zusammenstellung von Biegewerkzeugen bzw. Werkzeugsätzen minimiert werden. Nach Bedarf kann das oder können die auf der oder den Hilfsschienen zwischengespeicherten Biegestempel oder Biegegesenke an einen freien Speicherplatz im Werkzeugspeicher zurück verbracht werden. Damit steht erneut ein ausreichender Hilfsspeicherplatz an der Werkzeug-Manipulationsvorrichtung zur Verfügung. Die Manipulationsvorgänge können dabei durch die Einziehvorrichtung oder die Ausschiebevorrichtung je nach Verstellrichtung durchgeführt werden.

Zum besseren Verständnis der Erfindung wird diese anhand der nachfolgenden Figuren näher erläutert.

Es zeigen jeweils in stark vereinfachter, schematischer Darstellung:
- Fig. 1: eine mögliche Ausbildung einer Biegepresse mit einem schematisch seitlich daneben angedeuteten Werkzeug-Speichersystem, in Frontansicht;
- Fig. 2: die Biegepresse nach Fig. 1 in Seitenansicht;
- Fig. 3: das Werkzeug-Speichersystem nach Fig. 1 in Frontansicht;
- Fig. 4: die untere Werkzeug-Manipulationsvorrichtung in Draufsicht, in stark stilisierter Darstellung;
- Fig. 5: die untere Werkzeug-Manipulationsvorrichtung nach Fig. 4, in Frontansicht;
- Fig. 6: die obere Werkzeug-Manipulationsvorrichtung in Untersicht sowie in stark stilisierter Darstellung;
- Fig. 7: die obere Werkzeug-Manipulationsvorrichtung nach Fig. 6, in Frontansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

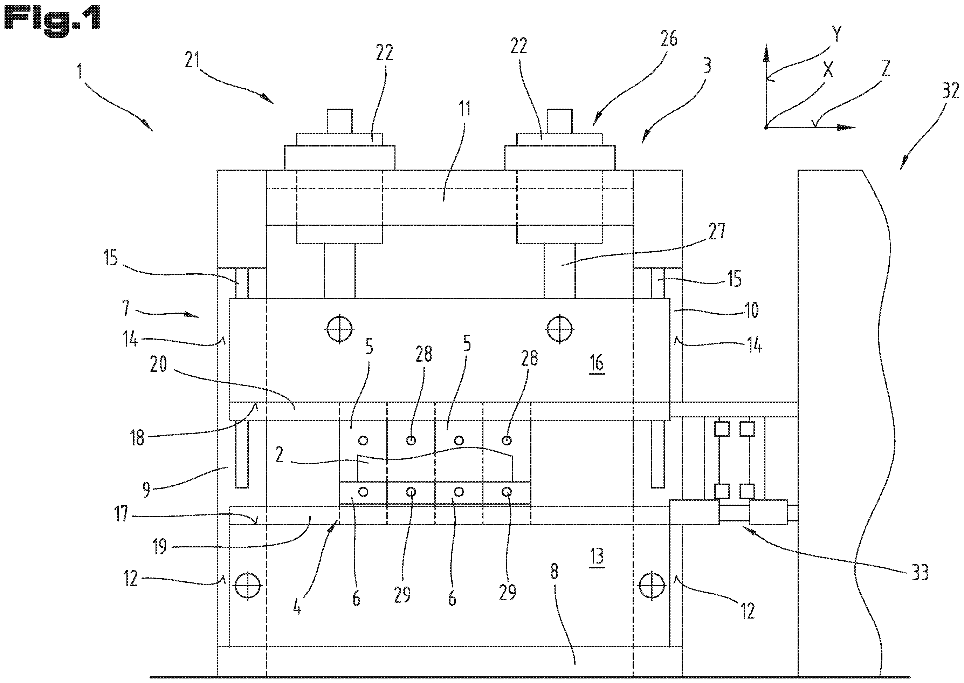

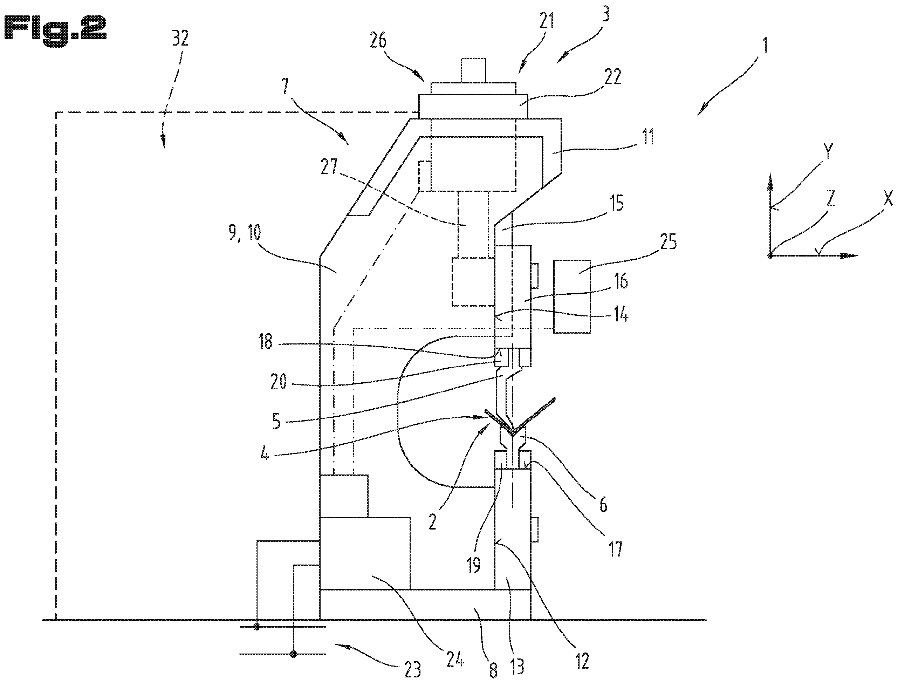

In den Fig. 1 bis 7 ist eine Fertigungsanlage 1 in stark schematisch vereinfachter Darstellung gezeigt, welche im vorliegenden Fall insbesondere für das Freiformbiegen von aus einem Blech zu fertigenden Werkstücken 2 mittels Gesenkbiegen ausgebildet ist.

Die im vorliegenden Fall für das Biegen eingesetzte Fertigungsanlage 1 umfasst eine Biegemaschine, im vorliegenden Ausführungsbeispiel eine Biegepresse 3, insbesondere eine Abkantpresse oder Gesenkbiegepresse, zur Herstellung der Werkstücke 2 bzw. Werkteile zwischen zumindest einem relativ zueinander verstellbaren Biegewerkzeug 4. Das Biegewerkzeug 4 umfasst im vorliegenden Ausführungsbeispiel zumindest einen Biegestempel 5, zumeist jedoch mehrere Biegestempel 5, und zumindest ein Biegegesenk 6, zumeist jedoch mehrere damit zusammenwirkende Biegegesenke 6. Der zumindest eine Biegestempel 5 ist dabei oberhalb des zu fertigenden Werkstücks 2 an der Biegepresse 3 angeordnet und dort auch entsprechend gehalten, insbesondere geklemmt. Auch das zumindest eine Biegegesenk 6 ist an der Biegepresse 3 gehalten, insbesondere geklemmt.

Als Koordinatensystem wird bei derartigen Biegepressen 3 grundsätzliches als "X"-Richtung jene bezeichnet, welche in einer Horizontalebene sowie in senkrechter Ausrichtung bezüglich der Längserstreckung des Biegewerkzeugs 4, insbesondere dessen Biegestempel 5 sowie Biegegesenk 6 verläuft. Somit ist dies jene Richtung, welche auch der Zufuhrrichtung des Blechs oder der Entnahmerichtung des Blechs oder des Werkstücks 2 entspricht. Als "Y"-Richtung wird die Vertikalrichtung verstanden, welche somit in Höhenrichtung des Biegewerkzeugs 4 verläuft. Schließlich wird als "Z"-Richtung jene Richtung verstanden, welche in Längsrichtung bzw. in der Längserstreckung des Biegewerkzeugs 4, insbesondere dessen Biegestempel 5 sowie Biegegesenk 6, verläuft. Damit ist auch die Längserstreckung der vom Biegewerkzeug 4 definierten Biegekante in der "Z"-Richtung verlaufend ausgerichtet.

Ein Maschinengestell 7 der Biegepresse 3 umfasst beispielsweise eine Bodenplatte 8, auf der vertikal aufragend, zueinander in Querrichtung beabstandet und parallel zueinander ausgerichtete Seitenwangen 9, 10 angeordnet sind. Diese sind bevorzugt durch einen massiven, beispielsweise aus einem Blechformteil gebildeten Querverband 11 an ihren von der Bodenplatte 8 distanzierten Endbereichen miteinander verbunden.

Die Seitenwangen 9, 10 können zur Bildung eines Freiraums für das Umformen des Werkstücks 2 oder das Beschicken etwa C - förmig ausgebildet sein, wobei an Frontstirnflächen 12 von bodennahen Schenkeln der Seitenwangen 9, 10 ein feststehender, insbesondere auf der Bodenplatte 8 aufstehender Pressbalken 13 befestigt ist. Dieser ortsfest angeordnete und feststehende Pressbalken 13 kann auch als Presstisch bezeichnet werden, an dem Teile des Biegewerkzeugs 4 angeordnet und auch gehalten sind. An Frontstirnflächen 14 von von der Bodenplatte 8 entfernten Schenkeln ist in Linearführungen 15 ein zu dem den Tischbalken bildenden Pressbalken 13 relativ verstellbarer weiterer Pressbalken 16, insbesondere ein Druckbalken, geführt gelagert. Auf einander gegenüberliegenden, parallel zueinander verlaufenden Stirnflächen 17, 18 der beiden Pressbalken 13, 16 können Werkzeugaufnahmen 19, 20 zur Bestückung mit dem oder den Biegewerkzeugen 4 angeordnet sein. Das oder die Biegewerkzeuge 4 können auch unter Zwischenschaltung eines nicht näher dargestellten Adapters an den Werkzeugaufnahmen 19, 20 gehalten sein, wobei dies für einen Wechselvorgang einzelner Komponenten oder des gesamten Biegewerkzeugs 4 eher als nicht günstig angesehen wird, jedoch auch eine Möglichkeit darstellt.

Die gezeigte Biegepresse 3 weist als Antriebsanordnung 21 für den verstellbaren Pressbalken 16, nämlich den Druckbalken, z.B. zwei mit elektrischer Energie betriebene Antriebsmittel 22 auf, die mit einer aus einem Energienetz 23 angespeisten Steuervorrichtung 24 leitungsverbunden sind. Über ein mit der Steuervorrichtung 24 kommunikationsverbundenes Eingabeterminal 25 kann beispielsweise der Betrieb der Biegepresse 3, insbesondere auch der Wechselvorgang des Biegewerkzeugs 4, gesteuert werden.

Bei den Antriebsmitteln 22 kann es sich z.B. um elektromotorische Spindeltriebe 26 handeln, wie sie allgemein bekannt sind, von denen Stellmittel 27 für eine reversible Stellbewegung des durch den Druckbalken gebildeten oberen Pressbalkens 16 mit diesem, zum Beispiel antriebsverbunden sind. Unabhängig davon wäre es aber auch noch möglich, das oder die Antriebsmittel 22 durch hydraulisch und/oder pneumatisch betätigbare Stellmittel zu bilden. Dabei können Zylinder-Kolbenanordnungen Anwendung finden. Es wären aber auch andere Antriebsmittel, wie z.B. Exzenterantriebe, Kniehebelantriebe, Zahnstangenantriebe usw. denkbar.

Auf weitere für den Betrieb einer derartigen Biegepresse 3 erforderliche Details, wie beispielsweise Sicherheitseinrichtungen, Zufuhrvorrichtungen und/oder Kontrollvorrichtungen, wird in der gegenständlichen Beschreibung zur Vermeidung einer unnötigen Länge der Beschreibung verzichtet.

Weiters kann die Fertigungsanlage 1 auch noch einen hier nicht näher dargestellten Manipulator umfassen, welcher von einem Vorratsstapel von zu verformenden bzw. abzukantenden Blechen zumindest ein Stück davon entnimmt und in den Arbeitsbereich bzw. die Bedienseite der Biegepresse 3 verbringt.

Der Manipulator kann seinerseits eine Greifzange umfassen, die ihrerseits Greiffinger aufweist. Die Greiffinger weisen an der dem zu fertigenden Werkstück 2 zugewendeten Seite jeweils Klemmflächen auf. Durch eine entsprechende Verschwenkung der beiden Greiffinger gegeneinander und dem Aufbringen einer ausreichenden Klemmkraft, wird über das Zusammenwirken der Klemmflächen das Blech bzw. das zu fertigende Werkstück 2 vom Manipulator gehalten und entsprechend bewegt sowie positioniert. Mit den Greiffingern der Greifzange ist ein entsprechendes Greifen und in späterer Folge bedingt durch die Klemmbewegung ein ausreichender Halt für das aus dem Blech zu fertigende Werkstück 2 gewährleistet.

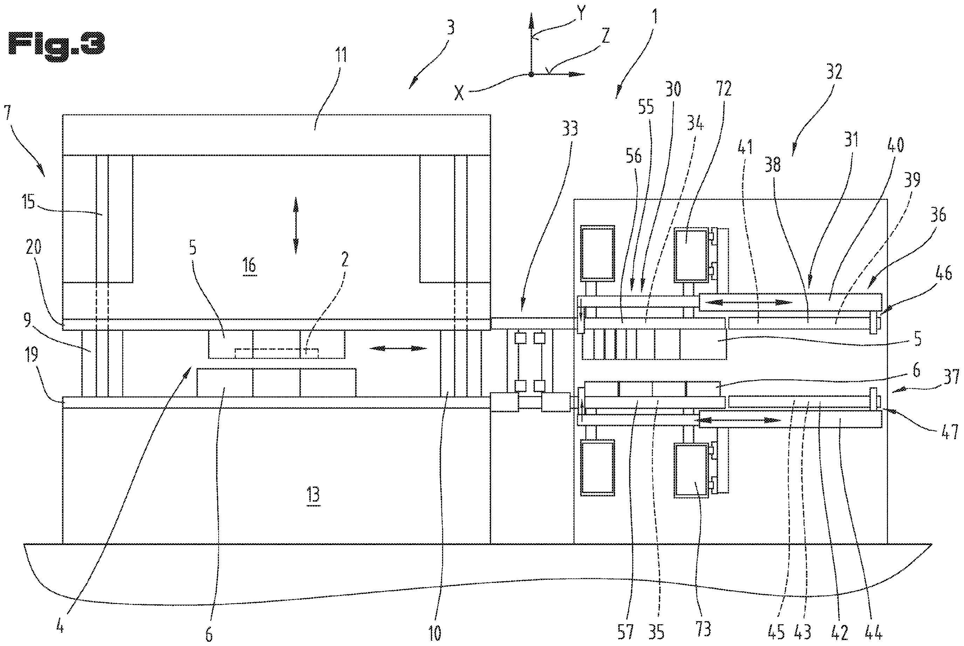

Weiters ist hier noch vereinfacht dargestellt, dass das oder die Biegewerkzeuge 4, insbesondere der Biegestempel 5 und/oder das Biegegesenk 6, zum Manipulieren oder Handhaben derselben jeweils zumindest eine eigene Ausnehmung 28, 29 aufweisen können. Unter Manipulieren des Biegewerkzeugs 4 wird hier verstanden, dass dieses bzw. deren Biegestempel 5 und/oder Biegegesenk 6 je nach Bedarf bevorzugt automatisiert von einem in der Fig. 1 nur vereinfacht teilweise und in der Fig. 3 schematisch vereinfacht dargestellten Werkzeugspeicher 30 entnommen und zu einer der Werkzeugaufnahmen 19, 20 der Pressbalken 13, 16 verbracht und dort eingesetzt sowie geklemmt gehaltert wird. Dabei kann auch von einem Werkzeug-Wechselsystem gesprochen werden, mit welchem die Tauschvorgänge mit den dazu notwendigen Anlagenteilen durchgeführt werden können. Die Anordnung sowie Ausbildung des Werkzeugspeichers 30 kann in Abhängigkeit vom Aufbau des Maschinengestells 7 erfolgen. Es könnten auch mehrere Werkzeugspeicher 30 vorgesehen werden, wobei hier eine seitliche Anordnung bezüglich der Längserstreckung der Pressbalken 13, 16 oder bezüglich der Seitenwangen 9, 10 gezeigt und vorgesehen ist.

Zum Tauschen oder Wechseln des Biegewerkzeugs 4 oder der Biegewerkzeuge 4 werden diese nach deren klemmenden Halterung aus den Werkzeugaufnahmen 19, 20 entnommen und durch ein anderes Biegewerkzeug 4 ersetzt. Dabei wird das zu tauschenden Biegewerkzeug 4 zumeist zurück in den Werkzeugspeicher 30 bzw. das Werkzeugdepot gebracht, gegebenenfalls dort zwischengespeichert, und anschließend entsprechend den zur Verfügung stehenden Speicherplätzen abgelegt, um so später für einen weiteren oder einen anderen Biegevorgang wiederum entnommen und in der oder den Werkzeugaufnahmen 19, 20 erneut eingesetzt werden zu können. Für die Handhabung während des Tauschvorganges könnten die Ausnehmungen 28, 29 im Biegewerkzeug 4 dienen. Es wären aber auch andere Möglichkeiten denkbar, um eine Halterung zwischen einer nachfolgend noch näher beschriebenen Werkzeug-Manipulationseinheit 31 und dem Biegewerkzeug 4 bzw. dem das Biegewerkzeug 4 bildenden Biegestempel 5 und/oder Biegegesenk 6 bilden zu können.

Bevorzugt wird jedoch das Biegewerkzeug 4 nur durch eine überwiegende oder sogar ausschließliche Längsverschiebung aus dem Werkzeugspeicher 30 entnommen oder in diesen zurück verbracht, wobei an der Werkzeug-Manipulationseinheit 31 eine Zwischenspeicherung des Biegewerkzeugs 4 vorteilhaft ist. Anschließend nach der Entnahme aus dem Werkzeugspeicher 30 kann die Übergabe von der Werkzeug-Manipulationseinheit 31 an die Werkzeugaufnahmen 19, 20 oder aber auch die Übernahme von den Werkzeugaufnahmen 19, 20 auf die Werkzeug-Manipulationseinheit 31 erfolgen. Bei dieser Ausführungsform des Werkzeugspeichers 30 sind die Biegestempel 5 in ihrer hängenden Lage und die Biegegesenke 6 in ihrer stehenden Lage bevorratet, so wie diese auch in ihrer späteren Einsatzposition an der Biegepresse 3 angeordnet sind.

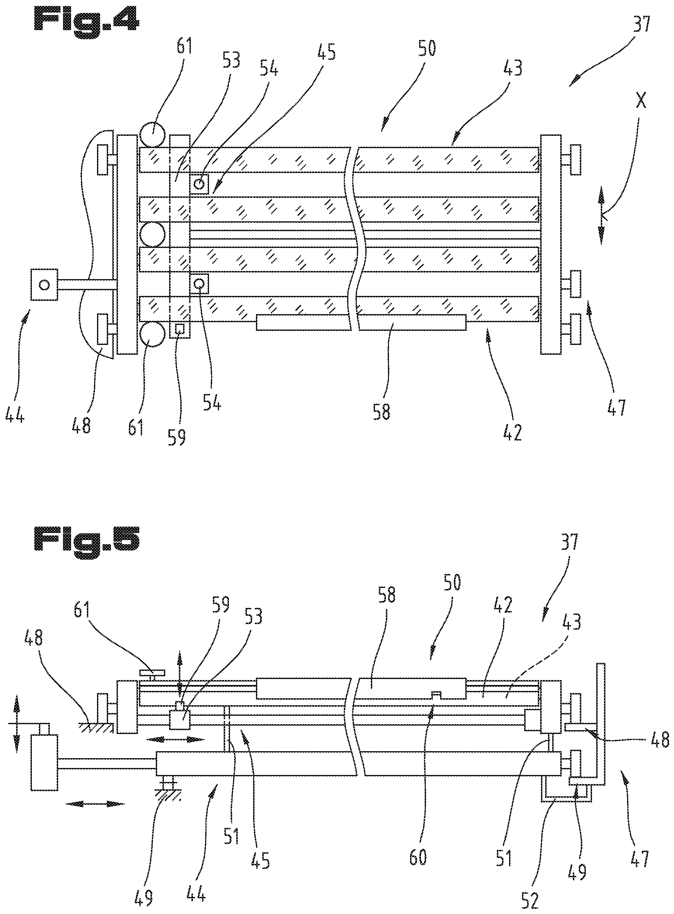

In den Fig. 3 bis 7 ist vereinfacht die Fertigungsanlage 1 mit der Biegepresse 3 und einem seitlich, also neben dem Maschinengestell 7, angeordneten Werkzeug-Speichersystem 32 stilisiert sowie in unterschiedlichen Ansichten dargestellt. Das Werkzeug-Speichersystem 32 kann aus mehreren Komponenten bzw. Anlagenteilen zusammengesetzt sein und umfasst bei diesem Ausführungsbeispiel grundsätzlich den Werkzeugspeicher 30 sowie die Werkzeug-Manipulationseinheit 31. Ein Teil der Werkzeug-Manipulationseinheit 31 ist vereinfacht in den Fig. 4 und 5 dargestellt.

Weiters ist hier noch vereinfacht dargestellt, dass das vom Werkzeug-Speichersystem 32 an die Biegepresse 3 zu übergebende Biegewerkzeug 4 oder die vom Werkzeug-Speichersystem 32 an die Biegepresse 3 zu übergebenden Biegewerkzeuge 4 oder das oder die von der Biegepresse 3 zu übernehmenden Biegewerkzeuge 4 mittels einer Transfervorrichtung 33 entsprechend für deren Übergabe oder Übernahme manipuliert werden können. Die Transfervorrichtung 33 kann dabei so ausgebildet sein, dass der oder die Biegestempel 5 von der oberen Werkzeugaufnahme 20 bevorzugt durch eine Längsbewegung entnommen und an das Werkzeug-Speichersystem 32 übergeben werden. Gleiches gilt aber auch für das oder die Biegegesenke 6. Mittels der Transfervorrichtung 33 kann aber auch die Beschickung von Biegestempeln 5 und/oder Biegegesenken 6 ausgehend vom Werkzeug-Speichersystem 32 hin zur Biegepresse 3 erfolgen.

Die gesamte Fertigungsanlage 1 mit ihren einzelnen Anlagenteilen ist zumeist auf einem nicht näher bezeichneten Hallenboden als bevorzugt ebene Aufstandsfläche aufgestellt, wie dies in der Fig. 3 angedeutet ist.

Im vorliegenden Ausführungsbeispiel dient der Werkzeugspeicher 30 dazu, eine Vielzahl von Biegestempeln 5 sowie Biegegesenken 6 darin entsprechend sortiert aufnehmen und bevorraten zu können. Je nach der aufzunehmenden Anzahl an Biegewerkzeugen 4, insbesondere dessen Biegestempel 5 sowie Biegegesenke 6, ist zumindest eine obere Speicherschiene 34 und zumindest eine untere Speicherschiene 35 vorgesehen. Bevorzugt jedoch sind mehrere obere Speicherschienen 34 sowie mehrere untere Speicherschienen 35 zur Bildung des Werkzeugspeichers 30 vorgesehen. Weiters ist die zumindest eine obere Speicherschiene 34 und die zumindest eine untere Speicherschiene 35 in einem vorgegebenen, und bevorzugt fixen Vertikalabstand voneinander distanziert angeordnet. Im Gegensatz zu verstellbar oder verfahrbar angeordneten Speicherschienen sind sowohl die oberen Speicherschienen 34 als auch die unteren Speicherschienen 35 ortsfest zueinander angeordnet und an einem nicht näher bezeichneten Grundgestell gehalten. Sind mehrere obere Speicherschienen 34 vorgesehen, können diese eine obere Speicherebene definieren. Gleiches gilt aber auch für die unteren Speicherschienen 35, welche ihrerseits eine untere Speicherebene definieren können.

Durch das Aufteilen des Werkzeugspeichers 30 bevorzugt in mehrere obere Speicherschienen 34 sowie mehrere untere Speicherschienen 35 können diese jeweils sowohl parallel zueinander sowie in "X"-Richtung hintereinander in der jeweiligen Speicherebene angeordnet sein.

Weiters ist hier noch im Bereich des Werkzeug-Speichersystems 32 gezeigt, dass seitlich neben dem Werkzeugspeicher 30, also in "Z"-Richtung daneben, die Werkzeug-Manipulationseinheit 31 vorgesehen bzw. angeordnet ist. Um aus jeder der durch die Speicherschienen 34 oder 35 definierten Speicherebenen den oder die Biegestempel 5 sowie das oder die Biegegesenke 6 entsprechend dem durchzuführenden Ein- oder Auslagervorgang manipulieren zu können, umfasst die Werkzeug-Manipulationseinheit 31 zumindest eine obere Werkzeug-Manipulationsvorrichtung 36 sowie zumindest eine untere Werkzeug-Manipulationsvorrichtung 37. Jede der Werkzeug-Manipulationsvorrichtungen 36 oder 37 ist jeweils im Bereich einer Stirnseite der zumindest einen oberen Speicherschiene 34 oder der zumindest einen unteren Speicherschiene 35 angeordnet. Aufgrund der Längserstreckung der Speicherschienen 34 sowie 35 wird bei diesem Ausführungsbeispiel unter dem Bereich der Stirnseite jene Seite der Speicherschienen 34, 35 verstanden, welche auf der von der Biegepresse 3 abgewendeten Seite liegt.

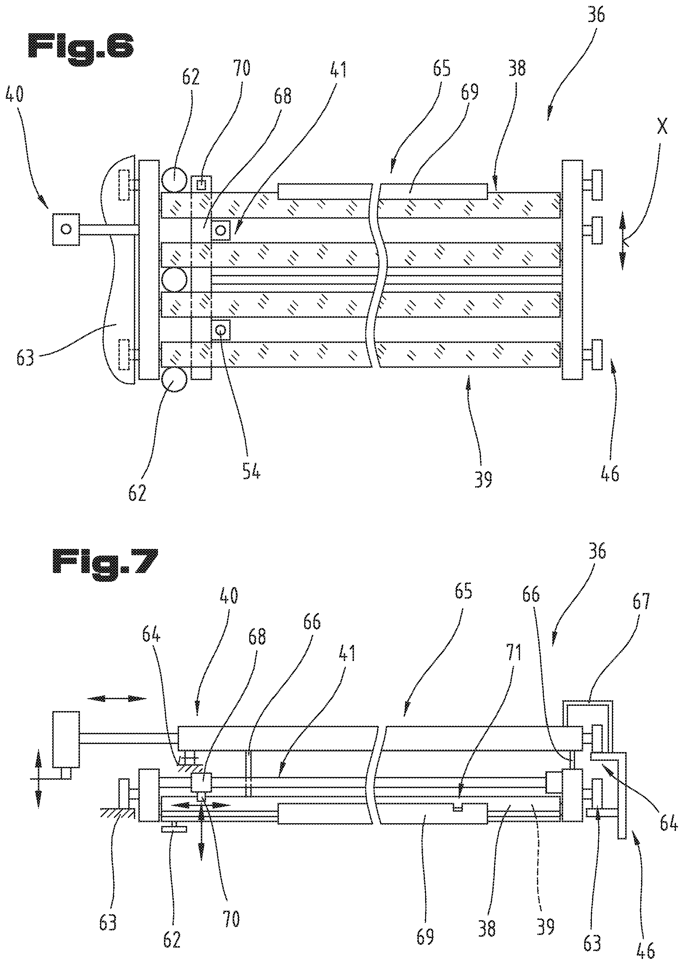

Wie nun besser aus einer Zusammenschau der Fig. 3 entweder mit den Fig. 4 und 5 oder mit den Fig. 6 und 7 zu ersehen ist, umfasst jede der Werkzeug-Manipulationsvorrichtungen 36, 37 wiederum mehrere Bauteile bzw. Bauteilkomponenten. Weiters kann jede der Werkzeug-Manipulationsvorrichtungen 36 und/oder 37 seitlich neben dem zumindest einen Werkzeugspeicher 30 in "X"-Richtung verfahrbar geführt sein, um so bei der Anordnung von mehreren Speicherschienen 34 und/oder 35 für den durchzuführenden Handlingvorgang zu der jeweiligen oberen Speicherschiene 34 oder zu der jeweiligen unteren Speicherschiene 35 gelangen zu können bzw. verfahren zu werden.

Durch die getrennte und eigenständige Anordnung der Werkzeug- Manipulationseinheit 31 mit deren zumindest einen oberen Werkzeug-Manipulationsvorrichtung 36 sowie deren zumindest einen unteren Werkzeug-Manipulationsvorrichtung 37 wird nachfolgend jeweils nur für eine derselben deren Ausbildung näher erläutert. Eine entsprechende spiegelbildliche Anordnung bzw. Ausbildung der anderen Werkzeug-Manipulationsvorrichtung 37 oder 36 ist entsprechend vorzusehen.

Im vorliegenden Ausführungsbeispiel umfasst die obere Werkzeug-Manipulationsvorrichtung 36 zumindest eine obere Arbeitsschiene 38 sowie zumindest eine seitlich dazu angeordnete, parallel bezüglich der oberen Arbeitsschiene 38 verlaufende obere Hilfsschiene 39. Die zumindest beiden Schienen 38, 39 sind bevorzugt in der gleichen oberen Speicherebene angeordnet wie die oberen Speicherschienen 34. Des Weiteren ist noch zumindest eine obere Einziehvorrichtung 40 vorgesehen, mit welcher es möglich ist, bei entsprechender Ausrichtung der oberen Arbeitsschiene 38 oder der oberen Hilfsschiene 39 bezüglich der zumindest einen oberen Speicherschiene 34 zumindest einen aufzunehmenden Biegestempel 5 vom Werkzeugspeicher 30 hin auf die obere Werkzeug-Manipulationsvorrichtung 36 verlagern zu können. Dazu ist entweder die obere Arbeitsschiene 38 oder die obere Hilfsschiene 39 fluchtend bezüglich der zumindest einen oberen Speicherschiene 34 auszurichten, um so einen einfachen Übergabevorgang in bevorzugt geradliniger Bewegung durchführen zu können.

Weiters umfasst bei diesem Ausführungsbeispiel die obere Werkzeug-Manipulationsvorrichtung 36 noch zumindest eine obere Ausschiebevorrichtung 41. Die zumindest eine obere Ausschiebevorrichtung 41 dient dazu, entweder von der oberen Arbeitsschiene 38 oder von der oberen Hilfsschiene 39 zumindest einen Biegestempel 5 entweder zurück in den Werkzeugspeicher 30, insbesondere die zumindest eine obere Speicherschiene 34, oder aber auch hin zur Transfervorrichtung 33 übergeben, insbesondere ausschieben, zu können.

Wie bereits zuvor beschrieben, ist die untere Werkzeug-Manipulationsvorrichtung 37 grundsätzlich gleichartig aufgebaut wie die obere Werkzeug-Manipulationsvorrichtung 36. Dies kann aus einer Zusammenschau der Fig. 3 mit den Fig. 4 und 5 entnommen werden.

So umfasst die untere Werkzeug-Manipulationsvorrichtung 37 zumindest eine untere Arbeitsschiene 42 und zumindest eine seitlich dazu angeordnete, ebenso parallel bezüglich der unteren Arbeitsschiene 42 dazu verlaufende untere Hilfsschiene 43. Weiters umfasst die untere Manipulationsvorrichtung 37 auch noch zumindest eine untere Einziehvorrichtung 44 für zumindest ein auf der Arbeitsschiene 42 oder der Hilfsschiene 43 aufzunehmendes Biegegesenk 6. Gleichfalls ist auch hier zumindest eine untere Ausschiebevorrichtung 45 vorgesehen, welche dazu dient, zumindest ein Biegegesenk 6 von der unteren Arbeitsschiene 42 oder der unteren Hilfsschiene 43 von der unteren Werkzeug-Manipulationsvorrichtung 37 abgeben, insbesondere ausschieben, zu können.

Jede der Einziehvorrichtungen 40, 44 kann an einem eigenen Grundgestell angeordnet sein oder dieses ausbilden, wobei je Einziehvorrichtung 40, 44 ein eigener Einzieharm in paralleler Richtung bezüglich der Arbeitsschienen 38, 42 ausfahrbar ist. An jedem der ausfahrbaren Enden der Einzieharme ist ein eigener Betätigungsarm angeordnet, welche Betätigungsarme zumeist in vertikaler Richtung verstellbar ausgebildet sind, um entweder mit einem an der oberen Speicherschiene 34 angeordneten Biegestempel 5 oder mit einem an der unteren Speicherschiene 35 angeordneten Biegegesenk 6 für die durchzuführende Verstellbewegung in Eingriff verbracht zu werden. Für die jeweilige Ausfahrbewegung befindet sich jeder der Betätigungsarme in einer zurückverstellten Position, um Kollisionen mit dem Biegestempel 5 oder dem Biegegesenk 6 zu vermeiden. Befindet sich der jeweilige Betätigungsarm auf der von der Werkzeug-Manipulationsvorrichtung 36, 37 abgewendeten Seite des Biegestempels 5 oder des Biegegesenks 6, kann der jeweilige Betätigungsarm in seine Eingriffsstellung verstellt werden.

Wie nun wiederum besser aus den Fig. 3, 6 und 7 zu ersehen ist, ist die zumindest eine obere Werkzeug-Manipulationsvorrichtung 36 parallel bezüglich der oberen Speicherebene sowie in senkrechter Richtung bezüglich der Längserstreckung der zumindest einen oberen Speicherschiene 34 entlang einer oberen Längsführungsanordnung 46 verfahrbar. Auf die Darstellung von Antriebsmitteln zur Durchführung der Verfahrbewegungen wurde der besseren Übersichtlichkeit halber verzichtet.

Gleiches gilt aber auch für die zumindest eine untere Werkzeug-Manipulationsvorrichtung 37, welche entlang einer unteren Längsführungsanordnung 47 ebenfalls parallel bezüglich der unteren Speicherebene sowie in senkrechter Richtung bezüglich der Längserstreckung der zumindest einen unteren Speicherschiene 35 verfahrbar ist. Dies kann aus einer Zusammenschau der Fig. 3, 4 und 5 entnommen werden.

Durch die voneinander getrennte Ausbildung der oder den oberen Speicherschienen 34 mit der zumindest einen oberen Werkzeug-Manipulationsvorrichtung 36 sowie der oder den unteren Speicherschienen 35 mit der zumindest einen unteren Werkzeug-Manipulationsvorrichtung 37 kann so eine rasche und vor allem voneinander getrennte und unabhängige Bereitstellung und/oder Einlagerung von Biegestempeln 5 sowie Biegegesenken 6 erfolgen.

Wie bereits zuvor beschrieben, ist zur Vergrößerung bzw. Erhöhung des jeweiligen Speicherplatzes eine Mehrfachanordnung von oberen Speicherschienen 34 sowie mehreren unteren Speicherschienen 35 vorgesehen. Die einzelnen oberen Speicherschienen 34 sowie die einzelnen unteren Speicherschienen 35 sind in jeder ihrer Speicherebenen parallel zueinander verlaufend ausgerichtet, wobei die beiden von den jeweiligen Speicherschienen 34 oder 35 definierten Speicherebenen jeweils zueinander eine horizontale Ausrichtung aufweisen können.

In den Fig. 4 und 5 ist die untere Werkzeug-Manipulationsvorrichtung 37 vereinfacht dargestellt, wobei analog dazu die hier nachfolgend beschriebene Ausführungsform auch auf die obere Werkzeug-Manipulationsvorrichtung 36 übertragbar ist. Dies wird nachfolgend in den beiden Fig. 6 und 7 noch kurz erläutert.

Im vorliegenden Ausführungsbeispiel ist aus der Fig. 4 zu ersehen, dass die dargestellte vordere untere Schiene die untere Arbeitsschiene 42 und die oberhalb bzw. hinterhalb gezeigte Schiene die untere Hilfsschiene 43 bildet. Jede der Schienen 42, 43 weist einen nicht näher bezeichneten Aufnahmeschlitz auf, um in diesem einen Teil des Biegegesenks 6 zur Führung und Abstützung aufnehmen zu können. Um die zuvor beschriebene Verfahrbewegung der unteren Werkzeug-Manipulationsvorrichtung 37 in "X"-Richtung durchführen zu können, ist die untere Längsführungsanordnung 47 vorgesehen. Im vorliegenden Ausführungsbeispiel ist die untere Längsführungsanordnung 47 jeweils im Bereich einer der Stirnseiten der unteren Arbeitsschiene 42 sowie der unteren Hilfsschiene 43 durch zumindest eine erste untere Führungsbahn 48 sowie zumindest eine zweite untere Führungsbahn 49 gebildet. Dabei sei erwähnt, dass jede der unteren Führungsbahnen 48, 49 auch mehrere untere Einzelführungsbahnen aufweisen kann.

Bevorzugt sind die Einzelführungsbahnen der unteren Führungsbahnen 48, 49 in "Z"-Richtung voneinander distanziert angeordnet, um so eine stabilere und vor allem kippsichere Führung für die untere Werkzeug-Manipulationsvorrichtung 37 bilden zu können. Die Aufhängung oder Lagerung der Einzelführungsbahnen der unteren Führungsbahnen 48, 49 kann z.B. in "Z"-Richtung durch eine Portalbauweise oder Portalkonstruktion erfolgen. Unabhängig davon könnte die Aufhängung oder Lagerung der Einzelführungsbahnen der unteren Führungsbahnen 48, 49 in "Y"-Richtung in Form einer Auslegerbauweise, Auslegerkonstruktion oder Balkonbauweise ausgeführt werden,

Dabei kann bei jeder der unteren Führungsbahnen 48, 49 auch ein vertikaler Versatz zwischen deren jeweiligen unteren Einzelführungsbahnen vorhanden bzw. ausgebildet sein.

Die zumindest eine untere Arbeitsschiene 42 sowie die zumindest eine untere Hilfsschiene 43 der unteren Werkzeug-Manipulationsvorrichtung 37 bilden unter anderem mit nicht näher bezeichneten Verbindungsteilen sowie weiteren Komponenten eine zusammengehörige untere Baueinheit 50 aus. Die untere Baueinheit 50 ist ihrerseits an der zumindest einen ersten unteren Führungsbahn 48 der unteren Längsführungsanordnung 47 mittels einer nicht näher dargestellten Antriebsvorrichtung in "X"-Richtung verfahrbar. Damit kann je nach Bedarf für die Übernahme oder Übergabe von Biegegesenken 6 eine entsprechende vorbestimmte relative Position bezüglich einer der unteren Speicherschienen 35 angefahren werden.

Weiters ist hier noch vereinfacht dargestellt, dass auch die untere Einziehvorrichtung 44 der unteren Werkzeug-Manipulationsvorrichtung 37 an der zuvor beschriebenen, zumindest einen zweiten unteren Führungsbahn 49 der unteren Längsführungsanordnung 47 auch eigenständig und unabhängig von der unteren Baueinheit 50 verfahrbar sein kann. Bevorzugt jedoch erfolgt eine gemeinsame Verfahrbewegung mit der unteren Baueinheit 50, wobei so eine zusätzliche Abstützung der unteren Werkzeug-Manipulationsvorrichtung 37 erzielt werden kann. Jede der beiden unteren Führungsbahnen 48, 49 ist bevorzugt im Bereich von einander gegenüberliegenden Stirnenden der unteren Baueinheit 50 angeordnet bzw. ausgebildet. Bevorzugt ist die erste untere Führungsbahn 48 in Vertikalrichtung gesehen oberhalb der zweiten unteren Führungsbahn 49 angeordnet bzw. ausgebildet.

Um eine gemeinsame Verfahrbewegung zwischen der unteren Baueinheit 50 und der unteren Einziehvorrichtung 44 durchführen zu können, kann zwischen der unteren Baueinheit 50 und der unteren Einziehvorrichtung 44 zumindest eine untere Kopplungsvorrichtung 51 vorgesehen sein. Bei Bedarf kann die untere Kopplungsvorrichtung 51 entriegelt bzw. gelöst werden, wodurch es möglich wird, die untere Baueinheit 50 unabhängig von der unteren Einziehvorrichtung 44 entlang von deren unteren Führungsbahnen 48, 49 verfahren zu können.

Es ist auch noch möglich, dass die untere Einziehvorrichtung 44 zumindest ein unteres Arretiermittel 52 oder eine Arretiervorrichtung aufweist bzw. damit versehen ist, mit welchem oder welcher es möglich wird, die untere Einziehvorrichtung 44 bei sich in einer Arretierstellung befindlichem unteren Arretiermittel 52 relativ bezüglich der zumindest einen zweiten unteren Führungsbahn 49 der unteren Längsführungsanordnung 47 ortsfest positioniert halten zu können. Bevorzugt erfolgt eine Arretierung an der zweiten unteren Führungsbahn 49. Durch diese relative Positionierung der unteren Einziehvorrichtung 44 relativ bezüglich der zweiten unteren Führungsbahn 49 und der zuvor entriegelten unteren Kopplungsvorrichtung 51 wird es möglich, die eine untere Einziehvorrichtung 44 für das Einziehen bzw. Aufnehmen zumindest eines Biegegesenks 6 von einer unteren Speicherschiene 35 relativ zu dieser positioniert anordnen und halten zu können. Je nach relativer Stellung der unteren Baueinheit 50 kann nun entweder das aufzunehmende bzw. einzuziehende Biegegesenk 6 auf die untere Arbeitsschiene 42 oder auf die untere Hilfsschiene 43 eingezogen und aufgenommen werden. Dies hängt von der jeweiligen relativen Stellung der unteren Arbeitsschiene 42 sowie der unteren Hilfsschiene 43 zu der jeweiligen unteren Speicherschiene 35 ab. Dadurch kann mit einer unteren Einziehvorrichtung 44 das Auslangen gefunden werden und trotzdem entweder auf die untere Arbeitsschiene 42 oder die untere Hilfsschiene 43 die entsprechende Verlagerung des Biegegesenks 6 durchgeführt werden.

Die zuvor bereits kurz beschriebene untere Ausschiebevorrichtung 45 dient dazu, dass zumindest ein an der unteren Arbeitsschiene 42 oder der unteren Hilfsschiene 43 aufgenommenes Biegegesenk 6 entweder zurück auf eine der unteren Speicherschienen 35 oder für die Übergabe hin zur Biegepresse 3 ausschieben zu können. Bevorzugt ist die zumindest eine untere Ausschiebevorrichtung 45 an der zuvor beschriebenen, unteren Baueinheit 50 angeordnet bzw. befestigt. So kann die untere Ausschiebevorrichtung 45 zumindest ein in Richtung der Längserstreckung der unteren Arbeitsschiene 42 oder der unteren Hilfsschiene 43 verlagerbares, unteres Gleitstück 53 umfassen. Das untere Gleitstück 53 ist an nicht näher dargestellten Führungen in Richtung der Längserstreckung der unteren Arbeitsschiene 42 sowie der unteren Hilfsschiene 43 verstellbar geführt. So ist hier weiters gezeigt, dass das untere Gleitstück 53 unterhalb der Oberseite der unteren Arbeitsschiene 42 sowie der unteren Hilfsschiene 43 angeordnet ist. Damit können Kollisionen mit dem oder den an der Arbeitsschiene 42 und/oder der Hilfsschiene 43 angeordneten Biegegesenken 6 vermieden werden. Bevorzugt erstreckt sich das Gleitstück 53 in Querrichtung bezüglich der Längserstreckung der Arbeitsschiene 42 sowie der unteren Hilfsschiene 43.

Es ist auch noch vereinfacht dargestellt, dass am unteren Gleitstück 53 zumindest ein, bevorzugt jedoch mehrere Stellfinger 54 angeordnet bzw. vorgesehen sind, welche mit nicht näher bezeichneten Stellmitteln von einer mit dem zumindest einen Biegegesenk 6 in Eingriff befindlichen Arbeitsstellung in eine mit dem zumindest einen Biegegesenk 6 außer Eingriff befindlichen Ruhestellung verstellbar sind. Bevorzugt ist sowohl der unteren Arbeitsschiene 42 als auch der unteren Hilfsschiene 43 jeweils zumindest ein eigener Stellfinger 54 zugeordnet. Je nach Betätigung oder relativer Stellung des Stellfingers 54 sowie der Stellung der unteren Arbeitsschiene 42 oder unteren Hilfsschiene 43 relativ zu einer der unteren Speicherschienen 35 kann das oder können die jeweiligen Biegegesenke 6 von der unteren Baueinheit 50 abgegeben, insbesondere ausgeschoben werden.

Wie nun wieder besser wieder aus der Fig. 3 zu ersehen ist, ist im vorderen Bereich des Werkzeugspeichers 30 im unmittelbaren Anschluss- bzw. Übergabebereich zwischen der Transfervorrichtung 33 sowie der Werkzeug-Manipulationseinheit 31 mit deren oberen Werkzeug-Manipulationsvorrichtung 36 sowie deren unteren Werkzeug-Manipulationsvorrichtung 37 eine Bereitstellungseinheit 55 vorgesehen. Die hier vereinfacht dargestellte Bereitstellungseinheit 55 umfasst zumindest eine obere Bereitstellungsschiene 56 sowie zumindest eine untere Bereitstellungsschiene 57. Damit wird es möglich einen Werkzeugwechsel bzw. Werkzeugtausch zwischen der Biegepresse 3 und dem Werkzeugspeicher 30 noch einfacher durchzuführen. So können bei einer Entnahme von Biegestempeln 5 und/oder Biegegesenken 6 ausgehend von den Werkzeugaufnahmen 19, 20 diese von der Transfervorrichtung 33 an die obere Bereitstellungsschiene 56 oder die untere Bereitstellungsschiene 57 jeweils unabhängig voneinander weitergeführt bzw. übergeben werden. Die an der oberen Bereitstellungsschiene 56 angeordneten Biegestempel 5 können bei entsprechender Ausrichtung der oberen Werkzeug-Manipulationsvorrichtung 36 mittels deren oberer Einziehvorrichtung 40 entweder auf die obere Arbeitsschiene 38 oder die obere Hilfsschiene 39 verbracht werden. Gleiches gilt aber auch für die unterhalb angeordneten Biegegesenke 6. Diese werden von der unteren Bereitstellungsschiene 57 analog dazu von der unteren Einziehvorrichtung 44 entweder auf die untere Arbeitsschiene 42 oder die untere Hilfsschiene 43 verstellt bzw. dahin bewegt. Alle diese Bewegungen erfolgen bevorzugt geradlinig, um so einfache Verstellvorgänge für den Tausch bzw. Wechsel von Biegewerkzeugen 4 durchführen zu müssen. Die Bereitstellungseinheit 55 kann gemeinsam mit der Transfervorrichtung 33 eine Transfereinheit ausbilden.

Befinden sich an der unteren Bereitstellungsschiene 57 nur wenige oder gar nur ein Biegegesenk 6, so ist dieses ausgehend von seiner bezüglich der unteren Werkzeug-Manipulationsvorrichtung 37 benachbarten Stellung entlang der unteren Bereitstellungsschiene 57 hin zur Transfervorrichtung 33 zu verbringen. Dazu kann an der unteren Baueinheit 50 ein unterer Schieber 58 vorgesehen sein, welcher an der unteren Baueinheit 50 in paralleler Richtung bezüglich der zumindest einen unteren Arbeitsschiene 42 bevorzugt an dieser geführt gelagert ist. Mittels des unteren Schiebers 58 wird es möglich, bei entsprechender Verstellung desselben das oder die Biegegesenke 6 von dem hier rechtsseitigen Ende der unteren Bereitstellungsschiene 57 hin zum linksseitigen Ende der unteren Bereitstellungsschiene 57, also hin zur Transfervorrichtung 33, zu verlagern. Dazu ist der untere Schieber 58 von seiner die untere Baueinheit 50 in Richtung auf den Werkzeugspeicher 30 vorragenden Ausfahrstellung in eine sich innerhalb der unteren Baueinheit 50 befindliche Ruhestellung verstellbar.

Das in Richtung der Längserstreckung der unteren Arbeitsschiene 42 sowie der unteren Hilfsschiene 43 verstellbare, untere Gleitstück 53 kann zusätzlich zu dem oder den Stellfingern 54 ein erstes unteres Kupplungselement 59 aufweisen. Das erste untere Kupplungselement 59 kann mittels eines nicht näher bezeichneten Stellantriebes bevorzugt in vertikaler Richtung verstellt werden, um nach Bedarf mit einem am unteren Schieber 58 angeordneten oder ausgebildeten zweiten unteren Kupplungselement 60 in eine in Eingriff befindliche Kupplungsstellung verbracht zu werden.

Durch die Längsverstellung des unteren Gleitstücks 53 in Richtung der Längserstreckung der unteren Arbeitsschiene 42 bzw. der unteren Hilfsschiene 43 kann so nicht nur die zuvor beschriebene untere Ausschiebevorrichtung 45 mit dem oder den Stellfingern 54 verlagert werden, sondern auch noch bei entsprechender Verlagerung des ersten unteren Kupplungselements 59 ein Wirkeingriff mit dem unteren Schieber 58 hergestellt werden und damit dieser ebenfalls in Längserstreckung bzw. Längsrichtung der unteren Arbeitsschiene 42 verstellt werden. Die Längsverstellung des unteren Gleitstücks 53 kann beispielsweise mit einem nicht näher bezeichneten Stellglied, zum Beispiel einer Spindel und einem damit verbundenen Antriebsmotor, erfolgen. Es wären aber auch andere Antriebsmittel möglich. Damit kann in Kombination mit der Längsführung des unteren Gleitstücks 53 und dessen Stellglied die bedarfsweise relative Lage bezüglich der unteren Arbeitsschiene 42 sowie der unteren Hilfsschiene 43 bedarfsweise verstellt werden.

Aus den Fig. 4 und 5 ist noch zu ersehen, dass zumindest ein unteres Stellmittel 61, insbesondere ein Antriebsrad, an der zumindest einen unteren Arbeitsschiene 42 sowie der zumindest einen unteren Hilfsschiene 43 angeordnet sein kann. Im vorliegenden Ausführungsbeispiel sind mehrere untere Stellmittel 61 vorgesehen, welche dazu dienen, Bestandteile des Biegewerkzeugs 4, in diesem Fall das jeweilige Biegegesenk 6, soweit entweder auf die untere Arbeitsschiene 42 und/oder die untere Hilfsschiene 43 zu verbringen, dass bei einer durchgeführten Verfahrbewegung der unteren Werkzeug-Manipulationsvorrichtung 37 kein seitliches Überragen über die Schienen 42, 43 erfolgt. Damit können ungewollte Kollisionen mit den unteren Speicherschienen 35 des Werkzeugspeichers 30 vermieden werden. Dazu ist das zumindest eine untere Stellmittel 61 in einem dem Werkzeugspeicher 30 zugewendeten Endbereich der zumindest einen unteren Arbeitsschiene 42 und/oder der zumindest einen unteren Hilfsschiene 43 angeordnet. Die Dimensionierung und Anordnung des oder der unteren Stellmittel 61 erfolgt bevorzugt seitlich neben dem zu verlagernden Biegegesenk 6, um so in Art eines Reibungskontaktes die Verstellbewegung an der unteren Arbeitsschiene 42 und/oder der unteren Hilfsschiene 43 durchführen zu können.

Bei einer alternativen weiteren Ausführungsform wäre es möglich, das zumindest eine untere Stellmittel 61, nicht wie zuvor beschrieben als Antriebsrad, sondern als Zwischenrad, Losrad oder Leitrad auszubilden und an jenem Ende bzw. jenem Endbereich der unteren Werkzeug-Manipulationsvorrichtung 37 anzuordnen, welches bzw. welcher dem Werkzeugspeicher 30 zugewendet ist. Damit wird es möglich, dass das zumindest eine Zwischenrad, Losrad oder Leitrad während der Verfahrbewegung der unteren Werkzeug-Manipulationsvorrichtung 37 in "X"-Richtung mit randlich im Werkzeugspeicher 30 befindlichen Biegewerkzeugen 4, im vorliegenden Fall mit Biegegesenken 6, in Kontakt kommt und diese in "Z"-Richtung in den Werkzeugspeicher 30 hinein verlagert. Durch diese relative Verstellbewegung des oder der Biegewerkzeuge 4 kann so in "Z"-Richtung ein Spalt zwischen jenen randseitig im Werkzeugspeicher 30 befindlichen Biegewerkzeugen 4 und jenem oder jenen an der unteren Werkzeug-Manipulationsvorrichtung 37 befindlichen Biegewerkzeugen 4 ausgebildet bzw. geschaffen werden.

Die zuvor beschriebene Ausbildung bezieht sich auf die untere Werkzeug-Manipulationsvorrichtung 37 gemäß der Fig. 4 und 5, wobei die nachfolgende Beschreibung sich auf die dazu analoge Ausbildung bzw. Ausführung der oberen Werkzeug-Manipulationsvorrichtung 36 gemäß der Fig. 3 und 6 sowie 7 bezieht. Deshalb wird nachfolgend nur mehr eine kurze Aufzählung der Bauteile bzw. Bauteilgruppen erfolgen, wobei die detaillierte Beschreibung von der unteren Werkzeug-Manipulationsvorrichtung 37 sinngemäß sowie analog auf die obere Werkzeug-Manipulationsvorrichtung 36 zu übertragen ist.

Die obere Längsführungsanordnung 46 umfasst hier analog zur zuvor beschriebenen unteren Längsführungsanordnung 47 zumindest eine erste obere Führungsbahn 63 sowie zumindest eine zweite obere Führungsbahn 64. Um auch eine entsprechende Verfahrbewegung der oberen Werkzeug-Manipulationsvorrichtung 36 in "X"-Richtung seitlich neben dem Werkzeugspeicher 30 durchführen zu können, ist jeweils im Bereich von den einander gegenüberliegend angeordneten Stirnseiten der oberen Arbeitsschiene 38 sowie der oberen Hilfsschiene 39 zumindest die erste obere Führungsbahn 63 sowie die zumindest eine zweite obere Führungsbahn 64 vorgesehen.

Dabei sei erwähnt, dass jede der oberen Führungsbahnen 63, 64 auch mehrere obere Einzelführungsbahnen aufweisen kann. Bevorzugt sind diese in "Z"-Richtung voneinander distanziert angeordnet, um so eine stabile und vor allem kippsichere Führung für die obere Werkzeug-Manipulationsvorrichtung 36 bilden zu können. Dabei kann bei jeder der oberen Führungsbahnen 63, 64 auch ein vertikaler Versatz zwischen deren jeweiligen oberen Einzelführungsbahnen vorhanden bzw. ausgebildet sein.

Weiters können auch hier wiederum unter anderem die zumindest eine obere Arbeitsschiene 38 und die zumindest eine obere Hilfsschiene 39 eine obere Baueinheit 65 der oberen Werkzeug-Manipulationsvorrichtung 36 ausbilden. So kann die obere Baueinheit 65 und damit sowohl die obere Arbeitsschiene 38 als auch die obere Hilfsschiene 39 gemeinsam an der zumindest einen ersten oberen Führungsbahn 63 der oberen Längsführungsanordnung 46 mittels eines nicht näher dargestellten Antriebes in "X"-Richtung seitlich neben den oberen Speicherschienen 34 verfahren werden. Damit kann die Übernahme oder Übergabe von Biegestempeln 5 zwischen der zumindest einen oberen Speicherschiene 34 und der oberen Baueinheit 65, insbesondere deren oberer Arbeitsschiene 38 und/oder oberer Hilfsschiene 39, einfach durchgeführt werden.

Die obere Einziehvorrichtung 40 der oberen Werkzeug-Manipulationsvorrichtung 36 kann ihrerseits an der zumindest einen zweiten oberen Führungsbahn 64 verfahrbar angeordnet sein. Damit kann auch wiederum eine voneinander unabhängige Verstellbwegung bzw. Verfahrbewegung relativ bezüglich der oberen Baueinheit 65 erfolgen. Um eine gemeinsame Verfahrbewegung der oberen Baueinheit 65 mit der oberen Einziehvorrichtung 40 entlang der oberen Längsführungsanordnung 46 durchführen zu können, kann zwischen der oberen Baueinheit 65 und der oberen Einziehvorrichtung 40 zumindest eine obere Kopplungsvorrichtung 66 vorgesehen sein. Die obere Kopplungsvorrichtung 66 kann gleichfalls, wie zuvor für die untere Kopplungsvorrichtung 51 beschrieben, entweder die obere Baueinheit 65 und die obere Einziehvorrichtung 40 miteinander koppeln oder bei entkoppelter Stellung eine voneinander unabhängige Verstellbewegung der beiden Komponenten ermöglichen.

Gleichfalls kann auch hier die obere Einziehvorrichtung 40 zumindest ein oberes Arretiermittel 67 aufweisen, mit welchem bei sich in der Arretierstellung befindlichem oberen Arretiermittel 67 die obere Einziehvorrichtung 40 relativ bezüglich der zumindest einen zweiten oberen Führungsbahn 64 ortsfest positioniert gehalten ist. Die von dem zumindest einen oberen Arretiermittel 67 eingenommene Arretierstellung wird bevorzugt zwischen der Einziehvorrichtung 40 und der zweiten oberen Führungsbahn 64 ausgebildet. Damit kann bei entkuppelter oberer Kopplungsvorrichtung 66 die obere Einziehvorrichtung 40 relativ bezüglich der zweiten oberen Führungsbahn 64 an dieser arretiert und somit positioniert gehalten werden. So kann bei sich in der Arretierstellung befindlicher oberer Einziehvorrichtung 40 und entkoppelter, oberer Kopplungsvorrichtung 66 entweder die obere Arbeitsschiene 38 oder die obere Hilfsschiene 39 in fluchtender Ausrichtung zu einer der oberen Speicherschienen 34 verstellt werden. Damit kann wahlweise die Übernahme oder Abgabe von Biegestempeln 5 zwischen der oberen Baueinheit 65 und der jeweiligen oberen Speicherschiene 34 einfach vorgewählt werden, ohne dass eine weitere zusätzliche Einziehvorrichtung 40, 44 benötigt wird.

Jede der Einziehvorrichtungen 40, 44 dient dazu, die jeweiligen Komponenten des Biegewerkzeugs 4 von einer der Speicherschienen 34, 35 oder einer der Bereitstellungsschienen 56, 57 auf eine der Baueinheiten 50, 65 zu verlagern.

Die obere Ausschiebevorrichtung 41 ist hier an der oberen Baueinheit 65 angeordnet und kann ihrerseits ein in Richtung der Längserstreckung der zumindest einen oberen Arbeitsschiene 38 sowie der zumindest einen oberen Hilfsschiene 39 verlagerbares bzw. daran geführtes, oberes Gleitstück 68 aufweisen. An diesem oberen Gleitstück 68 kann wiederum zumindest ein Stellfinger 54 angeordnet sein, welcher für die Ausschiebebewegung mit den zumindest einen Biegestempel 5 in eine damit in Eingriff befindliche Arbeitsstellung verlagerbar bzw. verstellbar ist. Dies kann durch eine Zylinder-Kolbenanordnung oder einen anderen Stellantrieb erfolgen. Es wäre aber auch eine Schwenkbewegung denkbar. Befindet sich der zumindest eine Stellfinger in seiner Ruhestellung, kann oder können beispielsweise der oder die Biegestempel 5 mittels der oberen Einziehvorrichtung 40 entweder auf die obere Arbeitsschiene 38 oder auf die zumindest eine obere Hilfsschiene 39 verlagert bzw. eingezogen werden.

Es wäre auch hier wiederum möglich, einen oberen Schieber 69 an der oberen Baueinheit 65 vorzusehen, welcher in paralleler Richtung bezüglich der zumindest einen oberen Arbeitsschiene 38 angeordnet, bevorzugt an dieser geführt gelagert ist. Der obere Schieber 69 kann auch wiederum von einer die obere Baueinheit 65 in Richtung auf den Werkzeugspeicher 30 überragenden Ausfahrstellung in eine sich innerhalb der äußeren Umgrenzung der oberen Baueinheit 65 befindliche Ruhestellung verstellbar ausgebildet sein. Zur Durchführung dieser relativen Verstellbewegung kann wiederum am oberen Gleitstück 68 ein erstes oberes Kupplungselement 70 angeordnet oder vorgesehen sein. Am oberen Schieber 69 kann ein zweites oberes Kupplungselement 71 angeordnet oder ausgebildet sein, wobei bei entsprechender Verstellung des ersten oberen Kupplungselements 70 eine Antriebsverbindung zwischen dem oberen Gleitstück 68 und dem oberen Schieber 69 bei sich in der Kupplungsstellung befindlichen Kupplungselementen 70, 71 herstellbar ist. Bei einer Verstellbewegung des oberen Gleitstücks 68 und in Eingriff befindlichen Kupplungselementen 70, 71 kann der obere Schieber 69 relativ bezüglich der oberen Baueinheit 65 bevorzugt in Richtung der Längserstreckung der oberen Arbeitsschiene 38 oder der oberen Hilfsschiene 39 relativ verlagert werden. Damit kann oder können bei geringer Anzahl an Biegestempeln 5 an der oberen Bereitstellungsschiene 56 diese näher hin zur Transfervorrichtung 33 verlagert, insbesondere geschoben werden.

Auch hier kann wiederum, um eine mögliche Kollision bei einer Verstellbewegung der oberen Werkzeug-Manipulationsvorrichtung 36 in senkrechter Richtung bezüglich der Längserstreckung der oberen Speicherschienen 34 ein oberes Stellmittel 62 vorgesehen sein, welches insbesondere auch als Antriebsrad ausgebildet sein kann. Anstelle des Antriebsrades könnte aber auch ein am Biegestempel 5 oder am Biegegesenk 6 anliegender Riemenantrieb oder dergleichen eingesetzt werden. Das zumindest eine obere Stellmittel 62 kann an der zumindest einen oberen Arbeitsschiene 38 und/oder der zumindest einen oberen Hilfsschiene 39 in einem dem Werkzeugspeicher 30 zugewendeten Endbereich angeordnet sein.

Bei einer weiteren alternativen Ausführungsform wäre es möglich, das zumindest eine obere Stellmittel 62, nicht wie zuvor beschrieben als Antriebsrad, sondern als Zwischenrad, Losrad oder Leitrad auszubilden und an jenem Ende bzw. jenem Endbereich der oberen Werkzeug-Manipulationsvorrichtung 36 anzuordnen, welches bzw. welcher dem Werkzeugspeicher 30 zugewendet ist. Damit wird es möglich, dass das zumindest eine Zwischenrad, Losrad oder Leitrad während der Verfahrbewegung der oberen Werkzeug-Manipulationsvorrichtung 36 in "X"-Richtung mit randlich im Werkzeugspeicher 30 befindlichen Biegewerkzeugen 4, im vorliegenden Fall mit Biegestempeln 5, in Kontakt kommt und diese in "Z"-Richtung in den Werkzeugspeicher 30 hinein verlagert. Durch diese relative Verstellbewegung des oder der Biegewerkzeuge 4 kann so in "Z"-Richtung ein Spalt zwischen jenen randseitig im Werkzeugspeicher 30 befindlichen Biegewerkzeugen 4 und jenem oder jenen an der oberen Werkzeug-Manipulationsvorrichtung 36 befindlichen Biegewerkzeugen 4 ausgebildet bzw. geschaffen werden.

Bei Vorhandensein eines Biegestempels 5 oder eines Biegegesenks 6 in dem dem Werkzeugspeicher 30 zugewendeten Endbereich einer der Werkzeug-Manipulationsvorrichtungen 36, 37 kann eine entsprechende Verlagerung in Richtung auf das gegenüberliegende Ende bzw. den gegenüberliegenden Endbereich der jeweiligen Baueinheit 50, 65 durchgeführt werden.

Weiters kann, wie dies vereinfacht in der Fig. 3 angedeutet ist, im Übergabebereich zwischen der oder den oberen Speicherschienen 34 und der oberen Werkzeug-Manipulationsvorrichtung 36 zumindest eine obere Wendevorrichtung 72 angeordnet bzw. vorgesehen sein. Die zumindest eine obere Wendevorrichtung 72 dient dazu, die Ausrichtung von Biegestempeln 5 um 180° verändern zu können. Es kann aber auch im Übergabebereich zwischen der oder den unteren Speicherschienen 35 und der unteren Werkzeug-Manipulationsvorrichtung 37 zumindest eine untere Wendevorrichtung 72 angeordnet bzw. vorgesehen sein. Damit kann ein Wenden von Biegegesenken 6 um 180° durchgeführt werden. Dieser Wendevorgang bezieht sich auf ein Verschwenken um eine in senkrechter Richtung bezüglich der Speicherebenen ausgerichteten Schwenkachse.

Durch die zuvor beschriebene Aufteilung der jeweiligen Baueinheit 50 sowie 65 in zumindest eine Arbeitsschiene 38, 42 sowie zumindest eine Hilfsschiene 39, 43 können so Umlagerungsvorgänge für das Zusammenstellen des jeweiligen Werkzeugsatzes zur Bildung eines Biegewerkzeugs 4 aus bevorzugt mehreren Biegestempeln 5 sowie mehreren Biegegesenken 6 vereinfacht werden. Damit können auf die jeweilige Arbeitsschiene 38, 42 nur jene Teile des Biegewerkzeugs aufgeschoben werden, welche in späterer Folge auch im Bereich der Biegepresse 3 benötigt werden. Befinden sich noch weitere Komponenten des Biegewerkzeugs 4 in Einziehrichtung gesehen vor dem benötigten Biegestempel 5 oder Biegegesenk 6, kann der oder können die nicht benötigten Biegestempel 5 oder Biegegesenke 6 auf der jeweiligen Hilfsschiene 39, 43 zwischengespeichert werden. Befindet sich der benötigte Biegestempel 5 oder das benötigte Biegegesenk 6 im unmittelbaren Übergabebereich hin zur Baueinheit 50 oder 65, kann die jeweilige Arbeitsschiene 38, 42 in fluchtender Ausrichtung zu der jeweiligen Speicherschiene 34, 35 verstellt werden. Erst dann kann oder soll der jeweilige Biegestempel 5 oder das Biegegesenk 6 auf eine der Arbeitsschienen 38, 42 mittels der Einziehvorrichtung 40, 44 auf die jeweilige Arbeitsschiene 38, 42 verlagert werden. Nachfolgend können die auf der jeweiligen Hilfsschiene 39, 43 zwischengespeicherten Biegestempel 5 oder Biegegesenke 6 an einen freien Speicherplatz einer der Speicherschienen 34, 35 zurück verlagert werden.

Einige der Speicherschienen 34, 35 können auch noch dazu verwendet werden, an zumindest einer derselben einen vorbereiteten Werkzeugsatz des Biegewerkzeugs 4 in der richtigen Reihenfolge zusammengestellt zwischen zu speichern. Dann kann mit einem einfachen Übernahmevorgang des bereits zusammengestellten Satzes an Biegestempeln 5 oder Biegegesenken 6 dieser auf die jeweilige Werkzeug-Manipulationsvorrichtung 36 oder 37 übernommen werden und von dieser direkt zur jeweiligen Bereitstellungsschiene 56, 57 verbracht und an die jeweilige Bereitstellungsschiene 56, 57 übergeben werden. Für diese Bereitstellung an bereits für den nächsten Biegevorgang vorgesehenen bzw. benötigten Biegestempeln 5 sowie Biegegesenken 6 kann grundsätzlich jede der Speicherschienen 34, 35 verwendet werden. Bevorzugt wird jedoch jene Speicherschiene 34, 35 verwendet, welche bevorzugt unmittelbar benachbart zu einer der Bereitstellungsschienen 56, 57 angeordnet ist. Es könnten aber auch mehrere der Speicherschienen 34 und/oder 35 dazu verwendet werden, um zumindest ein bereits zusammengestelltes Biegewerkzeug 4 aus einem oder mehreren Biegestempeln 5 sowie einem oder mehreren Biegegesenken 6 aufnehmen zu können.

Diese als Zwischenspeicherschiene dienenden Speicherschienen 34 und/oder 35 könnten aber auch dazu Verwendung finden, ein bei der Biegepresse 3 nicht mehr benötigtes Biegewerkzeug 4 vor der Einlagerung in den Werkzeugspeicher 30 zwischenzeitlich aufnehmen zu können. Die entsprechende sortierte Ablage der einzelnen Biegestempel 5 und/oder Biegegesenke 6 zurück in den Werkzeugspeicher 30 kann dann nachfolgend durchgeführt werden.

Weiters wäre es aber auch noch möglich, dass das Werkzeug-Speichersystem 32 zwei nebeneinander angeordnete Werkzeugspeicher 30 umfasst und eine Werkzeug-Manipulationseinheit 31 zwischen den beiden Werkzeugspeichern 30 angeordnet bzw. vorgesehen ist. Damit kann aus beiden Werkzeugspeichern 30 die entsprechende Beschickung oder Versorgung der Biegepresse 3 mit den entsprechenden Biegewerkzeugen 4 erfolgen.

Eine weitere mögliche Ausführungsform der Fertigungsanlage 1 kann darin bestehen, dass mit einem Werkzeug-Speichersystem 32 umfassend einen Werkzeugspeicher 30 sowie eine Werkzeug-Manipulationseinheit 31, beispielsweise zwei Biegepressen 3, mit den entsprechenden Biegewerkzeugen 4versorgt werden können. Dabei könnten beispielsweise die beiden Biegepressen 3 in Längserstreckung von deren Pressbalken 13, 16 gesehen, voneinander distanziert angeordnet sein und zwischen diesen das Werkzeug-Speichersystem 32 angeordnet sein.

Bei einer Mehrfachanordnung von Biegepressen 3 wäre es aber auch noch möglich, zwischen diesen beispielsweise zwei Werkzeugspeicher 30 mit einer diesen gemeinsam zugeordneten Werkzeug-Manipulationseinheit 31 vorzusehen. In diesem Fall könnten die beiden Biegepressen 3 sowie die Werkzeugspeicher 30 mit deren Bereitstellungsschienen 56, 57 in Längserstreckung der Pressbalken 13, 16 gesehen in einer Aufstellungslinie angeordnet sein.

Eine weitere Anordnungsmöglichkeit der Fertigungsanlage 1 bestünde noch darin, beispielsweise ebenfalls zwei Biegepressen 3 vorzusehen, welche "Rücken an Rücken" zueinander angeordnet sind. Damit sind die Beschickungs- bzw. Manipulationsseiten jeweils einander gegenüberliegend angeordnet. Seitlich neben diesen Biegepressen 3 könnten wiederum ein oder mehrere, insbesondere zwei, Werkzeugspeicher 30 in "X"-Richtung hintereinander angeordnet sein, wobei auf der von den Biegepressen 3 abgewendeten Seite der Werkzeugspeicher 30 eine Werkzeug-Manipulationseinheit 31 angeordnet bzw. vorgesehen ist.

Zusätzlich zu der zuvor beschriebenen Ausführungsform wäre es aber auch noch möglich, zwei weitere Biegepressen 3 wiederum "Rücken an Rücken" vorzusehen, wodurch insgesamt vier Stück Biegepressen 3 vom Werkzeug-Speichersystem 32 versorgt werden können. Dabei könnte wiederum mit einer einzigen Werkzeug-Manipulationseinheit 31 das Auslagen gefunden werden, wobei dann hier die Beschickung der Biegepressen 3 jeweils in "X"-Richtung gesehen an den voneinander abgewendeten Frontseiten der Biegepressen 3 erfolgt. Da in diesem Fall eine höhere Anzahl an Biegewerkzeugen 4 vorrätig zu halten sind, könnte eine Mehrfachanordnung von Werkzeugspeichern 30 bzw. eine vergrößerte Ausführung derselben Anwendung finden.

Eine weitere Möglichkeit der Ausbildung und Anordnung von einzelnen Komponenten der Fertigungsanlage 1 bestünde noch darin, dass der grundsätzliche Aufbau eine Biegepresse 3, einen Werkzeugspeicher 30 sowie eine Werkzeug-Manipulationseinheit 31 vorsieht. Zusätzlich dazu könnte dann auf der von der Biegepresse 3 abgewendeten Seite der Werkzeug-Manipulationseinheit 31 noch zumindest ein oder aber mehrere Werkzeug-Zwischenspeicher angeordnet bzw. vorgesehen sein. Dieser oder diese Werkzeug-Zwischenspeicher können dazu dienen, beispielsweise während der Durchführung von Biegevorgängen bereits mehrere Sätze an Biegewerkzeugen 4 für die nachfolgenden Biegevorgänge aus dem Werkzeugspeicher 30 zu entnehmen und in der dafür benötigten Reihenfolge jeden der zusammengestellten Werkzeugsätze der Biegewerkzeuge 4 in einer eigenen Zwischenspeicherschiene des Werkzeugzwischenspeichers oder der Werkzeugzwischenspeicher vorbereitet abzulegen. Der oder die Werkzeug-Zwischenspeicher können aber auch noch dazu dienen, jene von der Biegepresse 3 nicht mehr benötigten Komponenten des Biegewerkzeugs 4 zwischen zu speichern und diese dann wiederum von dort entnehmen zu können und in einer entsprechenden sortierten Ablage im Werkzeugspeicher 30 ablegen zu können.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente der Fertigungsanlage 1, insbesondere deren Werkzeug-Speichersystem 32, teilweise unmaßstäblich und/oder vergrößert und/oder verkleinert dargestellt wurden.

**Bezugszeichenaufstellung**

| | | | |
|---|---|---|---|
| 1 | Fertigungsanlage | 31 | Werkzeug-Manipulationseinheit |
| 2 | Werkstück | 32 | Werkzeug-Speichersystem |
| 3 | Biegepresse | 33 | Transfervorrichtung |
| 4 | Biegewerkzeug | 34 | obere Speicherschiene |
| 5 | Biegestempel | 35 | untere Speicherschiene |
| 6 | Biegegesenk | 36 | obere Werkzeug-Manipulationsvorrichtung |
| 7 | Maschinengestell | | |
| 8 | Bodenplatte | 37 | untere Werkzeug-Manipulationsvorrichtung |
| 9 | Seitenwange | | |
| 10 | Seitenwange | 38 | obere Arbeitsschiene |
| 11 | Querverband | 39 | obere Hilfsschiene |
| 12 | Frontstirnfläche | 40 | obere Einziehvorrichtung |
| 13 | Pressbalken | 41 | obere Ausschiebevorrichtung |
| 14 | Frontstirnfläche | 42 | untere Arbeitsschiene |
| 15 | Linearführung | 43 | untere Hilfsschiene |
| 16 | Pressbalken | 44 | untere Einziehvorrichtung |
| 17 | Stirnfläche | 45 | untere Ausschiebevorrichtung |
| 18 | Stirnfläche | 46 | obere Längsführungsanordnung |
| 19 | Werkzeugaufnahme | 47 | untere Längsführungsanordnung |
| 20 | Werkzeugaufnahme | 48 | erste untere Führungsbahn |
| 21 | Antriebsanordnung | 49 | zweite untere Führungsbahn |
| 22 | Antriebsmittel | 50 | untere Baueinheit |
| 23 | Energienetz | 51 | untere Kopplungsvorrichtung |
| 24 | Steuervorrichtung | 52 | unteres Arretiermittel |
| 25 | Eingabeterminal | 53 | unteres Gleitstück |
| 26 | Spindeltrieb | 54 | Stellfinger |
| 27 | Stellmittel | 55 | Bereitstellungseinheit |
| 28 | Ausnehmung | 56 | obere Bereitstellungsschiene |
| 29 | Ausnehmung | 57 | untere Bereitstellungsschiene |
| 30 | Werkzeugspeicher | 58 | unterer Schieber |
| 59 | erstes unteres Kupplungselement | | |
| 60 | zweites unteres Kupplungselement | | |
| 61 | unteres Stellmittel | | |
| 62 | oberes Stellmittel | | |
| 63 | erste obere Führungsbahn | | |
| 64 | zweite obere Führungsbahn | | |
| 65 | obere Baueinheit | | |
| 66 | obere Kopplungsvorrichtung | | |
| 67 | oberes Arretiermittel | | |
| 68 | oberes Gleitstück | | |
| 69 | oberer Schieber | | |
| 70 | erstes oberes Kupplungselement | | |
| 71 | zweites oberes Kupplungselement | | |
| 72 | obere Wendevorrichtung | | |
| 73 | untere Wendevorrichtung | | |

## Patentansprüche

1. Werkzeug-Speichersystem (32) für eine Fertigungsanlage (1), insbesondere zum Freiformbiegen von Werkstücken (2) aus einem Blech mittels einer Biegepresse (3), umfassend
- zumindest einen Werkzeugspeicher (30) zur Aufnahme zumindest eines Biegewerkzeugs (4), wobei das Biegewerkzeug (4) zumindest einen Biegestempel (5) und zumindest ein Biegegesenk (6) aufweist,
- wobei der Werkzeugspeicher (30) zumindest eine obere Speicherschiene (34) und zumindest eine untere Speicherschiene (35) umfasst, welche zumindest eine obere Speicherschiene (34) und zumindest eine untere Speicherschiene (35) in einem Vertikalabstand voneinander distanziert sowie ortsfest zueinander angeordnet sind, wobei die zumindest eine obere Speicherschiene (34) eine obere Speicherebene und die zumindest eine untere Speicherschiene (35) eine untere Speicherebene definiert,
- zumindest eine Werkzeug-Manipulationseinheit (31),
- wobei die Werkzeug-Manipulationseinheit (31) zumindest eine obere Werkzeug-Manipulationsvorrichtung (36) und zumindest eine untere Werkzeug-Manipulationsvorrichtung (37) aufweist,
- zumindest eine Bereitstellungseinheit (55) mit zumindest einer oberen und/oder unteren Bereitstellungsschiene (56, 57),
**dadurch gekennzeichnet,**
- **dass** die zumindest eine obere Werkzeug-Manipulationsvorrichtung (36) im Bereich einer Stirnseite der zumindest einen oberen Speicherschiene (34) und die zumindest eine untere Werkzeug-Manipulationsvorrichtung (37) im Bereich einer Stirnseite der zumindest einen unteren Speicherschiene (35) angeordnet ist,
- **dass** die zumindest eine obere Werkzeug-Manipulationsvorrichtung (36) zumindest eine obere Arbeitsschiene (38) und zumindest eine seitlich dazu angeordnete, parallel bezüglich der oberen Arbeitsschiene (38) verlaufende obere Hilfsschiene (39) aufweist, und weiters zumindest eine obere Einziehvorrichtung (40) für zumindest einen aufzunehmenden Biegestempel (5) sowie zumindest eine obere Ausschiebevorrichtung (41) für zumindest einen abzugebenden Biegestempel (5) umfasst,
- **dass** die zumindest eine untere Werkzeug-Manipulationsvorrichtung (37) zumindest eine untere Arbeitsschiene (42) und zumindest eine seitlich dazu angeordnete, parallel bezüglich der unteren Arbeitsschiene (42) verlaufende untere Hilfsschiene (43) aufweist, und weiters zumindest eine untere Einziehvorrichtung (44) für zumindest ein aufzunehmendes Biegegesenk (6) sowie zumindest eine untere Ausschiebevorrichtung (45) für zumindest ein abzugebendes Biegegesenk (6) umfasst,
- **dass** die zumindest eine obere Werkzeug-Manipulationsvorrichtung (36) parallel bezüglich der oberen Speicherebene sowie in senkrechter Richtung bezüglich der Längserstreckung der zumindest einen oberen Speicherschiene (34) entlang einer oberen Längsführungsanordnung (46) verfahrbar ist, und
- **dass** die zumindest eine untere Werkzeug-Manipulationsvorrichtung (37) parallel bezüglich der unteren Speicherebene sowie in senkrechter Richtung bezüglich der Längserstreckung der zumindest einen unteren Speicherschiene (35) entlang einer unteren Längsführungsanordnung (47) verfahrbar ist.

2. Werkzeug-Speichersystem (32) nach Anspruch 1, **dadurch gekennzeichnet, dass** mehrere obere Speicherschienen (34) sowie mehrere untere Speicherschienen (35) vorgesehen sind, und die oberen Speicherschienen (34) sowie die unteren Speicherschienen (35) in jeder der Speicherebenen parallel zueinander verlaufend ausgerichtet sind, wobei die beiden von den jeweiligen Speicherschienen (34, 35) definierten Speicherebenen jeweils eine horizontale Ausrichtung aufweisen.

3. Werkzeug-Speichersystem (32) nach Anspruch 1 oder 2, **dadurch gekennzeichnet, dass** die obere Längsführungsanordnung (46) zumindest eine erste obere Führungsbahn (63) sowie zumindest eine zweite obere Führungsbahn (64) aufweist.

4. Werkzeug-Speichersystem (32) nach einem der Ansprüche 1 bis 3, **dadurch gekennzeichnet, dass** die zumindest eine obere Arbeitsschiene (38) und die zumindest eine obere Hilfsschiene (39) der oberen Werkzeug-Manipulationsvorrichtung (36) eine obere Baueinheit (65) bilden und die obere Baueinheit (65) an der zumindest einen ersten oberen Führungsbahn (63) der oberen Längsführungsanordnung (46) mittels eines Antriebes verfahrbar ist.

5. Werkzeug-Speichersystem (32) nach einem der Ansprüche 1 bis 4, **dadurch gekennzeichnet, dass** die obere Einziehvorrichtung (40) der oberen Werkzeug-Manipulationsvorrichtung (36) an der zumindest einen zweiten oberen Führungsbahn (64) der oberen Längsführungsanordnung (46) verfahrbar ist.

6. Werkzeug-Speichersystem (32) nach einem der Ansprüche 1 bis 5, **dadurch gekennzeichnet, dass** zwischen der oberen Baueinheit (65) und der oberen Einziehvorrichtung (40) zumindest eine obere Kopplungsvorrichtung (66) vorgesehen ist.

7. Werkzeug-Speichersystem (32) nach einem der Ansprüche 1 bis 6, **dadurch gekennzeichnet, dass** die obere Einziehvorrichtung (40) zumindest ein oberes Arretiermittel (67) aufweist und die obere Einziehvorrichtung (40) bei dem sich in einer Arretierstellung befindlichen zumindest einen oberen Arretiermittel (67) relativ bezüglich der zumindest einen zweiten oberen Führungsbahn (64) der oberen Längsführungsanordnung (46) ortsfest positioniert gehalten ist.

8. Werkzeug-Speichersystem (32) nach einem der Ansprüche 1 bis 7, **dadurch gekennzeichnet, dass** die zumindest eine obere Ausschiebevorrichtung (41) an der oberen Baueinheit (65) angeordnet ist und ein in Richtung der Längserstreckung der zumindest einen oberen Arbeitsschiene (38) sowie der zumindest einen oberen Hilfsschiene (39) verlagerbares oberes Gleitstück (68) aufweist und am oberen Gleitstück (68) zumindest ein Stellfinger (54) angeordnet ist, welcher zumindest eine Stellfinger (54) von einer mit dem zumindest einen Biegestempel (5) in Eingriff befindlichen Arbeitsstellung in eine mit dem zumindest einen Biegestempel (5) außer Eingriff befindliche Ruhestellung verstellbar ist.

9. Werkzeug-Speichersystem (32) nach einem der Ansprüche 1 bis 8, **dadurch gekennzeichnet, dass** ein oberer Schieber (69) an der oberen Baueinheit (65) in paralleler Richtung bezüglich der zumindest einen oberen Arbeitsschiene (38) geführt gelagert ist, welcher obere Schieber (69) von einer die obere Baueinheit (65) in Richtung auf den Werkzeugspeicher (30) überragenden Ausfahrstellung in eine sich innerhalb der oberen Baueinheit (65) befindliche Ruhestellung verstellbar ist.

10. Werkzeug-Speichersystem (32) nach Anspruch 8 oder 9, **dadurch gekennzeichnet, dass** ein erstes oberes Kupplungselement (70) am oberen Gleitstück (68) angeordnet ist, welches erste obere Kupplungselement (70) mit einem am oberen Schieber (69) angeordneten, zweiten oberen Kupplungselement (71) in eine in Eingriff befindliche Kupplungsstellung bringbar ist.

11. Werkzeug-Speichersystem (32) nach einem der Ansprüche 1 bis 10, **dadurch gekennzeichnet, dass** zumindest ein oberes Stellmittel (62), insbesondere ein Antriebsrad, Zwischenrad, Losrad oder Leitrad, an der zumindest einen oberen Arbeitsschiene (38) und/oder der zumindest einen oberen Hilfsschiene (39) angeordnet ist, und dass das zumindest eine obere Stellmittel (62) in einem dem Werkzeugspeicher (30) zugewendeten Endbereich der zumindest einen oberen Arbeitsschiene (38) und/oder der zumindest einen oberen Hilfsschiene (39) angeordnet ist.

12. Werkzeug-Speichersystem (32) nach Anspruch 1 oder 2, **dadurch gekennzeichnet, dass** die unter Längsführungsanordnung (47) zumindest eine erste untere Führungsbahn (48) sowie zumindest eine zweite untere Führungsbahn (49) aufweist.

13. Werkzeug-Speichersystem (32) nach einem der Ansprüche 1, 2 oder 12, **dadurch gekennzeichnet, dass** die zumindest eine untere Arbeitsschiene (42) und die zumindest eine untere Hilfsschiene (43) der unteren Werkzeug-Manipulationsvorrichtungen (37) eine untere Baueinheit (50) bilden und die untere Baueinheit (50) an der zumindest einen ersten unteren Führungsbahn (48) der unteren Längsführungsanordnung (47) mittels eines Antriebes verfahrbar ist.

14. Werkzeug-Speichersystem (32) nach einem der Ansprüche 1, 2, 12 oder 13, **dadurch gekennzeichnet, dass** die untere Einziehvorrichtung (44) der unteren Werkzeug-Manipulationsvorrichtung (37) an der zumindest einen zweiten unteren Führungsbahn (49) der unteren Längsführungsanordnung (47) verfahrbar ist.

15. Werkzeug-Speichersystem (32) nach einem der Ansprüche 1, 2 oder 12 bis 14, **dadurch gekennzeichnet, dass** zwischen der unteren Baueinheit (50) und der unteren Einziehvorrichtung (44) zumindest eine untere Kopplungsvorrichtung (51) vorgesehen ist.

16. Werkzeug-Speichersystem (32) nach einem der Ansprüche 1, 2 oder 12 bis 15, **dadurch gekennzeichnet, dass** die untere Einziehvorrichtung (44) zumindest ein unteres Arretiermittel (52) aufweist und die untere Einziehvorrichtung (44) bei dem sich in einer Arretierstellung befindlichen zumindest einen unteren Arretiermittel (52) relativ bezüglich der zumindest einen zweiten unteren Führungsbahn (49) der unteren Längsführungsanordnung (47) ortsfest positioniert gehalten ist.

17. Werkzeug-Speichersystem (32) nach einem der Ansprüche 1, 2 oder 12 bis 16, **dadurch gekennzeichnet, dass** die zumindest eine untere Ausschiebevorrichtung (45) an der unteren Baueinheit (50) angeordnet ist und ein in Richtung der Längserstreckung der zumindest einen unteren Arbeitsschiene (42) sowie der zumindest einen unteren Hilfsschiene (43) verlagerbares unteres Gleitstück (53) aufweist und am unteren Gleitstück (53) zumindest ein Stellfinger (54) angeordnet ist, welcher zumindest eine Stellfinger (54) von einer mit dem zumindest einen Biegegesenk (6) in Eingriff befindlichen Arbeitsstellung in eine mit dem zumindest einen Biegegesenk (6) außer Eingriff befindliche Ruhestellung verstellbar ist.

18. Werkzeug-Speichersystem (32) nach einem der Ansprüche 1, 2 oder 12 bis 17, **dadurch gekennzeichnet, dass** ein unterer Schieber (58) an der unteren Baueinheit (50) in paralleler Richtung bezüglich der zumindest einen unteren Arbeitsschiene (42) geführt gelagert ist, welcher untere Schieber (58) von einer die untere Baueinheit (50) in Richtung auf den Werkzeugspeicher (30) überragenden Ausfahrstellung in eine sich innerhalb der unteren Baueinheit (50) befindliche Ruhestellung verstellbar ist.

19. Werkzeug-Speichersystem (32) nach Anspruch 17 oder 18, **dadurch gekennzeichnet, dass** ein erstes unteres Kupplungselement (59) am unteren Gleitstück (53) angeordnet ist, welches erste untere Kupplungselement (59) mit einem am unteren Schieber (58) angeordneten, zweiten unteren Kupplungselement (60) in eine in Eingriff befindliche Kupplungsstellung bringbar ist.

20. Werkzeug-Speichersystem (32) nach einem der Ansprüche 1, 2 oder 12 bis 19, **dadurch gekennzeichnet, dass** zumindest ein unteres Stellmittel (61), insbesondere ein Antriebsrad, Zwischenrad, Losrad oder Leitrad, an der zumindest einen unteren Arbeitsschiene (42) und/oder der zumindest einen unteren Hilfsschiene (43) angeordnet ist, und dass das zumindest eine untere Stellmittel (61) in einem dem Werkzeugspeicher (30) zugewendeten Endbereich der zumindest einen unteren Arbeitsschiene (42) und/oder der zumindest einen unteren Hilfsschiene (43) angeordnet ist.

21. Fertigungsanlage (1) zum Freiformbiegen von Werkstücken (2) aus einem Blech mit
- zumindest einer Biegepresse (3),
- einem Werkzeug-Speichersystem (32), welches Werkzeug-Speichersystem (32) zumindest einen Werkzeugspeicher (30) zur Aufnahme zumindest eines Biegewerkzeugs (4) sowie zumindest eine Werkzeug-Manipulationseinheit (31) umfasst,
**dadurch gekennzeichnet, dass**
das Werkzeug-Speichersystem (32) nach einem der vorhergehenden Ansprüche ausgebildet ist.

22. Verfahren zum Manipulieren zumindest eines Biegewerkzeugs (4) in einem Werkzeug-Speichersystem (32) einer Fertigungsanlage (1), insbesondere zum Freiformbiegen von Werkstücken (2) aus einem Blech mittels einer Biegepresse (3), bei dem
- zumindest ein Werkzeugspeicher (30) zur Aufnahme des zumindest einen Biegewerkzeugs (4) umfassend zumindest einen Biegestempel (5) und zumindest ein Biegegesenk (6) vorgesehen wird,
- wobei der Werkzeugspeicher (30) von zumindest einer oberen Speicherschiene (34) und zumindest einer unteren Speicherschiene (35) gebildet wird, und die zumindest eine obere Speicherschiene (34) und die zumindest eine untere Speicherschiene (35) in einem Vertikalabstand voneinander distanziert sowie ortsfest zueinander angeordnet werden, wobei von der zumindest einen oberen Speicherschiene (34) eine obere Speicherebene und von der zumindest einen unteren Speicherschiene (35) eine untere Speicherebene definiert wird,
- das zumindest eine Biegewerkzeug (4) mittels zumindest einer Werkzeug-Manipulationseinheit (31) zwischen dem zumindest ein Werkzeugspeicher (30) und zumindest einer Bereitstellungseinheit (55) mit zumindest einer oberen und/oder unteren Bereitstellungsschiene (56, 57) manipuliert wird, wobei die Werkzeug-Manipulationseinheit (31) von zumindest einer oberen Werkzeug-Manipulationsvorrichtung (36) und von zumindest einer unteren Werkzeug-Manipulationsvorrichtung (37) gebildet wird, insbesondere unter Verwendung eines Werkzeug-Speichersystem (32) nach einem der Ansprüche 1 bis 20 und/oder einer Fertigungsanlage (1) nach Anspruch 21,
**dadurch gekennzeichnet,**
- **dass** die zumindest eine obere Werkzeug-Manipulationsvorrichtung (36) im Bereich einer Stirnseite der zumindest einen oberen Speicherschiene (34) und die zumindest eine untere Werkzeug-Manipulationsvorrichtung (37) im Bereich einer Stirnseite der zumindest einen unteren Speicherschiene (35) angeordnet wird,
- **dass** die zumindest eine obere Werkzeug-Manipulationsvorrichtung (36) von zumindest einer oberen Arbeitsschiene (38) und von zumindest einer seitlich dazu angeordneten, parallel bezüglich der oberen Arbeitsschiene (38) verlaufenden oberen Hilfsschiene (39) gebildet wird, und die obere Werkzeug-Manipulationsvorrichtung (36) weiters zumindest eine obere Einziehvorrichtung (40) für zumindest einen aufzunehmenden Biegestempel (5) sowie zumindest eine obere Ausschiebevorrichtung (41) für zumindest einen abzugebenden Biegestempel (5) umfasst,
- **dass** die zumindest eine untere Werkzeug-Manipulationsvorrichtung (37) von zumindest einer unteren Arbeitsschiene (42) und von zumindest einer seitlich dazu angeordneten, parallel bezüglich der unteren Arbeitsschiene (42) verlaufenden unteren Hilfsschiene (43) gebildet wird, und die untere Werkzeug-Manipulationsvorrichtung (37) weiters zumindest eine untere Einziehvorrichtung (44) für zumindest ein aufzunehmendes Biegegesenk (6) sowie zumindest eine untere Ausschiebevorrichtung (45) für zumindest ein abzugebendes Biegegesenk (6) umfasst,
- **dass** die zumindest eine obere Werkzeug-Manipulationsvorrichtung (36) parallel bezüglich der oberen Speicherebene sowie in senkrechter Richtung bezüglich der Längserstreckung der zumindest einen oberen Speicherschiene (34) entlang einer oberen Längsführungsanordnung (46) verfahren werden kann,
- **dass** die zumindest eine untere Werkzeug-Manipulationsvorrichtung (37) parallel bezüglich der unteren Speicherebene sowie in senkrechter Richtung bezüglich der Längserstreckung der zumindest einen unteren Speicherschiene (35) entlang einer unteren Längsführungsanordnung (47) verfahren werden kann,
- **dass** das Zusammenstellen eines Biegewerkzeugs (4) aus mehreren Biegestempeln (5) und mehreren Biegegesenken (6) jeweils mittels der Werkzeug-Manipulationsvorrichtungen (36, 37) unabhängig voneinander durchgeführt wird,
- **dass** mittels der zumindest einen oberen Werkzeug-Manipulationsvorrichtung (36) von einer der oberen Speicherschienen (34) zumindest einer der benötigten und ausgewählten Biegestempel (5) auf seine zumindest eine obere Arbeitsschiene (38) verlagert wird, wobei zumindest ein nicht benötigter Biegestempel (5) von derselben oberen Speicherschiene (34) mittels der zumindest einen oberen Werkzeug-Manipulationsvorrichtung (36) auf seine zumindest eine obere Hilfsschiene (39) verlagert wird,
- und/oder dass mittels der zumindest einen unteren Werkzeug-Manipulationsvorrichtung (37) von einer der unteren Speicherschienen (35) zumindest eines der benötigten und ausgewählten Biegegesenke (6) auf seine zumindest eine untere Arbeitsschiene (42) verlagert wird, wobei zumindest ein nicht benötigtes Biegegesenk (6) von derselben unteren Speicherschiene (35) mittels der zumindest einen unteren Werkzeug-Manipulationsvorrichtung (37) auf seine zumindest eine untere Hilfsschiene (43) verlagert wird.

## Claims

1. A tool storage system (32)) for a production plant (1), in particular for free-form bending of workpieces (2) made from a sheet metal, by means of a bending press (3), comprising
- at least one tool storage (30) for holding at least one bending tool (4), wherein the bending tool (4) has at least one bending punch (5) and at least one bending die (6),
- wherein the tool storage (30) comprises at least one upper storage rail (34) and at least one lower storage rail (35), which at least one upper storage rail (34) and at least one lower storage rail (35) are disposed spaced apart from one another at a vertical distance, as well as locally fixed in place relative to one another, wherein the at least one upper storage rail (34) defines an upper storage plane, and the at least one lower storage rail (35) defines a lower storage plane,
- at least one tool manipulation unit (31),
- wherein the tool manipulation unit (31) comprises at least one upper tool manipulation device (36) and at least one lower tool manipulation device (37),
- at least one provisioning unit (55) having at least one upper and/or lower provisioning rail (56, 57),
**characterized in that**
- the at least one upper tool manipulation device (36) is disposed in the region of an end face of the at least one upper storage rail (34) and the at least one lower tool manipulation device (37) is disposed in the region of an end face of the at least one lower storage rail (35),
- the at least one upper tool manipulation device (36) has at least one upper working rail (38) and at least one upper auxiliary rail (39) disposed laterally relative to the former and running parallel with regard to the upper working rail (38), and furthermore comprises at least one upper drawing-in device (40) for at least one bending punch (5) to be held as well as at least one upper pushing-out device (41) for at least one bending punch (5) to be discharged,
- the at least one lower tool manipulation device (37) has at least one lower working rail (42) and at least one lower auxiliary rail (43) disposed laterally relative to the former and running parallel with regard to the lower working rail (42), and furthermore comprises at least one lower drawing-in device (44 for at least one bending die (6) to be held, as well as at least one lower pushing-out device (45) for at least one bending die (6) to be discharged,
- the at least one upper tool manipulation device (36) can be displaced parallel with regard to the upper storage plane, as well as in the vertical direction with regard to the longitudinal expanse of the at least one upper storage rail (34), along an upper longitudinal guide arrangement (46),
- the at least one lower tool manipulation device (37) can be displaced parallel with regard to the lower storage plane, as well as in the vertical direction with regard to the longitudinal expanse of the at least one lower storage rail (35), along a lower longitudinal guide arrangement (47).

2. The tool storage system (32) according to claim 1, **characterized in that** several upper storage rails (34) as well as several lower storage rails (35) are provided, and the upper storage rails (34) as well as the lower storage rails (35) are oriented to run parallel to one another in each of the storage planes, wherein the two storage planes defined by the respective storage rails (34, 35) each have a horizontal orientation.

3. The tool storage system (32) according to claim 1 or 2, **characterized in that** the upper longitudinal guide arrangement (46) comprises at least one first upper guide track (63) and at least one second upper guide track (64).

4. The tool storage system (32) according to one of claims 1 to 3, **characterized in that** the at least one upper working rail (38) and the at least one upper auxiliary rail (39) of the upper tool manipulation device (36) form an upper construction unit (65), and the upper construction unit (65) can be displaced on the at least one first upper guide track (63) of the upper longitudinal guide arrangement (46) by means of a drive.

5. The tool storage system (32) according to one of claims 1 to 4, **characterized in that** the upper drawing-in device (40) of the upper tool manipulation device (36) can be displaced on the at least one second upper guide track (64) of the upper longitudinal guide arrangement (46).

6. The tool storage system (32) according to one of claims 1 to 5, **characterized in that** at least one upper coupling device (66) is provided between the upper construction unit (65) and the upper drawing-in device (40).

7. The tool storage system (32) according to one of claims 1 to 6, **characterized in that** the upper drawing-in device (40) has at least one upper locking means (67), and the upper drawing-in device (40) is held locally fixed in position when the at least one upper locking means (67) is situated in the locking position with regard to the at least one second upper guide track (64) of the upper longitudinal guide arrangement (46).

8. The tool storage system (32) according to one of claims 1 to 7, **characterized in that** the at least one upper pushing-out device (41) is disposed on the upper construction unit (65), and has an upper slide piece (68) that can be displaced in the direction of the longitudinal expanse of the at least one upper working rail (38) as well as the at least one upper auxiliary rail (39), and at least one setting finger (54) is disposed on the upper slide piece (68), which at least one setting finger (54) can be changed from a working position, in which it is in engagement with the at least one bending punch (5), into a rest position in which it is out of engagement with the at least one bending punch (5).

9. The tool storage system (32) according to one of claims 1 to 8, **characterized in that** an upper slider (69) is mounted so as to be guided on the upper construction unit (65), in the parallel direction with regard to the at least one upper working rail (38), which upper slider (69) can be changed from an extended position in which it projects beyond the upper construction unit (65) in the direction toward the tool storage (30), into a rest position in which it is situated within the upper construction unit (65).

10. The tool storage system (32) according to claim 8 or 9, **characterized in that** a first upper coupling element (70) is disposed on the upper slide piece (68), which first upper coupling element (70) can be brought into a coupling position in which it is in engagement with a second upper coupling element (71) disposed on the upper slider (69).

11. The tool storage system (32) according to one of claims 1 to 10, **characterized in that** at least one upper setting means (62), in particular a drive wheel, intermediate wheel, idler wheel or guide wheel, is disposed on the at least one upper working rail (38) and/or the at least one upper auxiliary rail (39), and that the at least one upper setting means (62) is disposed in an end region of the at least one upper working rail (38) and/or the at least one upper auxiliary rail (39), which region faces the tool storage (30).

12. The tool storage system (32) according to claim 1 or 2, **characterized in that** the lower longitudinal guide arrangement (47) comprises at least one first lower guide track (48) and at least one second lower guide track (49).

13. The tool storage system (32) according to one of claims 1, 2 or 12, **characterized in that** the at least one lower working rail (42) and the at least one lower auxiliary rail (43) of the lower tool manipulation devices (37) form a lower construction unit (50), and the lower construction unit (50) can be displaced on the at least one first lower guide track (48) of the lower longitudinal guide arrangement (47) by means of a drive.

14. The tool storage system (32) according to one of claims 1, 2, 12 or 13, **characterized in that** the lower drawing-in device (44) of the lower tool manipulation device (37) can be displaced on the at least one second lower guide track (49) of the lower longitudinal guide arrangement (47).

15. The tool storage system (32) according to one of claims 1, 2 or 12 to 14, **characterized in that** at least one lower coupling device (51) is provided between the lower construction unit (50) and the lower drawing-in device (44).

16. The tool storage system (32) according to one of claims 1, 2 or 12 to 15, **characterized in that** the lower drawing-in device (44) has at least one lower locking means (52), and the lower drawing-in device (44) is held locally fixed in position when the at least one lower locking means (52) is situated in the locking position with regard to the at least one second lower guide track (49) of the lower longitudinal guide arrangement (47).

17. The tool storage system (32) according to one of claims 1, 2 or 12 to 16, **characterized in that** the at least one lower pushing-out device (45) is disposed on the lower construction unit (50), and has a lower slide piece (53) that can be displaced in the direction of the longitudinal expanse of the at least one lower working rail (42) as well as the at least one lower auxiliary rail (43), and at least one setting finger (54) is disposed on the lower slide piece (53), which at least one setting finger (54) can be changed from a working position, in which it is in engagement with the at least one bending die (6), into a rest position in which it is out of engagement with the at least one bending die (6).

18. The tool storage system (32) according to one of claims 1, 2 or 12 to 17, **characterized in that** a lower slider (58) is mounted so as to be guided on the lower construction unit (50), in the parallel direction with regard to the at least one lower working rail (42), which lower slider (58) can be changed from an extended position in which it projects beyond the lower construction unit (50) in the direction toward the tool storage (30), into a rest position in which it is situated within the lower construction unit (50).

19. The tool storage system (32) according to claim 17 or 18, **characterized in that** a first lower coupling element (59) is disposed on the lower slide piece (53), which first lower coupling element (59) can be brought into a coupling position in which it is in engagement with a second lower coupling element (60) disposed on the lower slider (58).

20. The tool storage system (32) according to one of claims 1, 2 or 12 to 19, **characterized in that** at least one lower setting means (61), in particular a drive wheel, intermediate wheel, idler wheel or guide wheel, is disposed on the at least one lower working rail (42) and/or the at least one lower auxiliary rail (43), and that the at least one lower setting means (61) is disposed in an end region of the at least one lower working rail (42) and/or the at least one lower auxiliary rail (43), which region faces the tool storage (30).

21. A production plant (1) for free-form bending of workpieces (2) made from a sheet metal, having
- at least one bending press (3),
- a tool storage system (32), which tool storage system (32) comprises at least one tool storage (30) for holding at least one bending tool (4), as well as at least one tool manipulation unit (31),
**characterized in that**
the tool storage system (32) is configured according to one of the preceding claims.

22. A method for manipulation of at least one bending tool (4) in a tool storage system (32) of a production plant (1), in particular for free-form bending of workpieces (2) made from a sheet metal, by means of a bending press (3), in which
- at least one tool storage (30) is provided for holding the at least one bending tool (4) comprising at least one bending punch (5) and at least one bending die (6),
- wherein the tool storage (30) is formed by at least one upper storage rail (34) and at least one lower storage rail (35), and the at least one upper storage rail (34) and the at least one lower storage rail (35) are disposed spaced apart from one another at a vertical distance, as well as locally fixed in place relative to one another, wherein the at least one upper storage rail (34) defines an upper storage plane, and the at least one lower storage rail (35) defines a lower storage plane,
- the at least one bending tool (4) is manipulated by means of at least one tool manipulation unit (31) between the at least one tool storage (30) and at least one provisioning unit (55) having at least one upper and/or lower provisioning rail (56, 57), wherein the tool manipulation unit (31) is formed by at least one upper tool manipulation device (36) and at least one lower tool manipulation device (37), in particular using a tool storage system (32) according to one of claims 1 to 20 and/or a production plant (1) according to claim 21,
**characterized in that**
- the at least one upper tool manipulation device (36) is disposed in the region of an end face of the at least one upper storage rail (34) and the at least one lower tool manipulation device (37) is disposed in the region of an end face of the at least one lower storage rail (35),
- the at least one upper tool manipulation device (36) is formed by at least one upper working rail (38) and by at least one upper auxiliary rail (39) disposed laterally relative to the former and running parallel with regard to the upper working rail (38), and the upper tool manipulation device (36) furthermore comprises at least one upper drawing-in device (40) for at least one bending punch (5) to be held, as well as at least one upper pushing-out device (41) for at least one bending punch (5) to be discharged,
- the at least one lower tool manipulation device (37) is formed by at least one lower working rail (42) and by at least one lower auxiliary rail (43) disposed laterally relative to the former and running parallel with regard to the lower working rail (42), and the lower tool manipulation device (37) furthermore comprises at least one lower drawing-in device (44) for at least one bending die (6) to be held, as well as at least one lower pushing-out device (45) for at least one bending die (6) to be discharged,
- the at least one upper tool manipulation device (36) can be displaced parallel with regard to the upper storage plane, as well as in the vertical direction with regard to the longitudinal expanse of the at least one upper storage rail (34), along an upper longitudinal guide arrangement (46),
- the at least one lower tool manipulation device (37) can be displaced parallel with regard to the lower storage plane, as well as in the vertical direction with regard to the longitudinal expanse of the at least one lower storage rail (35), along a lower longitudinal guide arrangement (47),
- the assembly of a bending tool (4) from several bending punches (5) and several bending dies (6) is, in each case, carried out by means of the tool manipulation devices (36, 37) independently of one another,
- at least one of the required and selected bending punches (5) is displaced to its at least one upper working rail (38) by means of the at least one upper tool manipulation device (36), from one of the upper storage rails (34), wherein at least one bending punch (5) that is not required is displaced to its at least one upper auxiliary rail (39), from the same upper storage rail (34), by means of the at least one upper tool manipulation device (36),
- and/or at least one of the required and selected bending dies (6) is displaced to its at least one lower working rail (42) by means of the at least one lower tool manipulation device (37), from one of the lower storage rails (35), wherein at least one bending die (6) that is not required is displaced to its at least one lower auxiliary rail (43), from the same lower storage rail (35), by means of the at least one lower tool manipulation device (37).

## Revendications

1. Système de stockage d'outils (32) pour une installation de fabrication (1), plus particulièrement pour le pliage à formes libres de pièces (2) à partir d'une tôle au moyen d'une presse plieuse (3), comprenant
- au moins un magasin d'outils (30) pour le logement d'au moins un outil de pliage (4), dans lequel l'outil de pliage (4) comprend au moins un poinçon de pliage (5) et au moins une matrice de pliage (6),
- dans lequel le magasin d'outils (30) comprend au moins un rail de stockage supérieur (34) et au moins un rail de stockage inférieur (35), cet au moins un rail de stockage supérieur (34) et au moins un rail de stockage inférieur (35) étant distants entre eux d'une distance verticale ainsi que disposés de manière l'un par rapport à l'autre, dans lequel l'au moins un rail de stockage supérieur (34) définit un plan de stockage supérieur et l'au moins un rail de stockage inférieur (35) définit un plan de stockage inférieur,
- au moins une unité de manipulation d'outils (31),
- dans lequel l'unité de manipulation d'outils (31) comprend au moins un dispositif de manipulation d'outil supérieur (36) et au moins un dispositif de manipulation d'outil inférieur (37),
- au moins une unité de mise à disposition (55) avec au moins un rail de mise à disposition supérieur et/ou inférieur (56, 57),
**caractérisé en ce que**
- l'au moins un dispositif de manipulation d'outil supérieur (36) est disposé au niveau d'une face frontale de l'au moins un rail de stockage supérieur (34) et l'au moins un dispositif de manipulation d'outil inférieur (37) est disposé au niveau d'une face frontale de l'au moins un rail de stockage inférieur (35),
- l'au moins un dispositif de manipulation d'outil supérieur (36) comprend au moins un rail de travail supérieur (38) et au moins un rail auxiliaire supérieur (39), disposé latéralement par rapport celui-ci, s'étendant parallèlement par rapport au rail de travail supérieur (38) et en outre au moins un dispositif de rétraction supérieur (40) pour au moins un poinçon de pliage (5) à loger ainsi qu'au moins un dispositif de poussée supérieur (41) pour au moins un poinçon de pliage (5) à sortir,
- l'au moins un dispositif de manipulation d'outil inférieur (37) comprend au moins un rail de travail inférieur (42) et au moins un rail auxiliaire inférieur (43), disposé latéralement par rapport celui-ci, s'étendant parallèlement par rapport au rail de travail inférieur (42) et en outre au moins un dispositif de rétraction inférieur (44) pour au moins une matrice de pliage (6) à loger ainsi qu'au moins un dispositif de poussée inférieur (45) pour au moins une matrice de pliage (6) à sortir,
- l'au moins un dispositif de manipulation d'outil supérieur (36) peut être déplacé parallèlement par rapport au plan de stockage supérieur ainsi que dans une direction perpendiculaire par rapport à l'extension longitudinale de l'au moins un rail de stockage supérieur (34) le long d'une disposition de guidage longitudinal supérieure (46) et
- l'au moins un dispositif de manipulation d'outil inférieur (37) peut être déplacé parallèlement par rapport au plan de stockage inférieur ainsi que dans une direction perpendiculaire par rapport à l'extension longitudinale de l'au moins un rail de stockage inférieur (35) le long d'une disposition de guidage longitudinal inférieure (47).

2. Système de stockage d'outils (32) selon la revendication 1, **caractérisé en ce que** plusieurs rails de stockage supérieurs (34) ainsi que plusieurs rails de stockage inférieurs (35) sont prévues et les rails de stockage supérieurs (34) ainsi que les rails de stockage inférieurs (35) sont orientés de façon à s'étendre parallèlement entre eux dans chacun des plans de stockage, dans lequel les deux plans de stockage définis par les rails de stockage (34, 35) respectifs présentent chacun une orientation horizontale.

3. Système de stockage d'outils (32) selon la revendication 1 ou 2, **caractérisé en ce que** la disposition de guidage longitudinal (46) comprend au moins une première piste de guidage supérieure (63) ainsi qu'au moins une deuxième piste de guidage supérieure (64).

4. Système de stockage d'outils (32) selon l'une des revendications 1 à 3, **caractérisé en ce que** l'au moins un rail de travail supérieur (38) et l'au moins un rail auxiliaire supérieur (39) du dispositif de manipulation d'outil supérieur (36) forment une unité modulaire supérieure (65) et l'unité modulaire supérieure (65) peut être déplacée le long de l'au moins une première piste de guidage supérieure (63) de la disposition de guidage longitudinal supérieure (46) au moyen d'un dispositif d'entraînement.

5. Système de stockage d'outils (32) selon l'une des revendications 1 à 4, **caractérisé en ce que** le dispositif de rétraction supérieur (40) du dispositif de manipulation d'outil supérieur (36) peut être déplacé le long de l'au moins une deuxième piste de guidage supérieure (64) de la disposition de guidage longitudinal supérieure (46).

6. Système de stockage d'outils (32) selon l'une des revendications 1 à 5, **caractérisé en ce que**, entre l'unité modulaire supérieure (65) et le dispositif de rétraction supérieur (40) est prévu au moins un dispositif de couplage supérieur (66).

7. Système de stockage d'outils (32) selon l'une des revendications 1 à 6, **caractérisé en ce que** le dispositif de rétraction supérieur (40) comprend au moins un moyen d'arrêt supérieur (67) et le dispositif de rétraction supérieur (40) est maintenu de manière fixe par rapport à l'au moins une deuxième piste de guidage supérieure (64) de la disposition de guidage longitudinal supérieure (46) lorsque l'au moins un moyen d'arrêt supérieur (67) se trouve dans une position d'arrêt.

8. Système de stockage d'outils (32) selon l'une des revendications 1 à 7, **caractérisé en ce que** l'au moins un dispositif de poussée supérieur (41) est disposé sur l'unité modulaire supérieure (65) et comprend un élément de glissement supérieur (68) mobile dans la direction de l'extension longitudinale de l'au moins un rail de travail supérieur (38) ainsi que de l'au moins un rail auxiliaire supérieur (39) et, sur l'élément de glissement supérieur (68), est disposé au moins un taquet de réglage (54) cet au moins un taquet de réglage (54) pouvant être déplacé d'une position de travail emboîtée avec l'au moins un poinçon de pliage (5) vers une position de repos déboîtée de l'au moins un poinçon de pliage (5).

9. Système de stockage d'outils (32) selon l'une des revendications 1 à 8, **caractérisé en ce qu'**un curseur supérieur (69) est monté sur l'unité modulaire supérieure (65) de manière guidée dans une direction parallèle par rapport à l'au moins un rail de travail supérieur (38), ce curseur supérieur (69) pouvant être déplacé d'une position de déploiement dépassant de l'unité modulaire supérieure (65) en direction du magasin d'outils (30) vers une position de repos se trouvant à l'intérieur de l'unité modulaire supérieure (65).

10. Système de stockage d'outils (32) selon la revendication 8 ou 9, **caractérisé en ce qu'**un premier élément de couplage supérieur (70) est disposé sur l'élément de glissement supérieur (68), ce premier élément de couplage supérieur (70) pouvant être amené, avec un deuxième élément de couplage supérieur (71), disposé sur le curseur supérieur(69), dans une position de couplage emboîtée.

11. Système de stockage d'outils (32) selon l'une des revendications 1 à 10, **caractérisé en ce qu'**au moins un moyen de réglage supérieur (62), plus particulièrement une roue d'entraînement, une roue intermédiaire, une roue libre ou une roue directrice, est disposée sur l'au moins un rail de travail supérieur (38) et/ou l'au moins un rail auxiliaire supérieur (39) et **en ce que** l'au moins un moyen de réglage supérieur (62) est disposé dans une zone d'extrémité orientée vers le magasin d'outils (30) de l'au moins un rail de travail supérieur (38) et/ou de l'au moins un rail auxiliaire supérieur (39).

12. Système de stockage d'outils (32) selon la revendication 1 ou 2, **caractérisé en ce que** la disposition de guidage longitudinal inférieure (47) comprend au moins une première piste de guidage inférieure (48) ainsi qu'au moins une deuxième piste de guidage inférieure (49).

13. Système de stockage d'outils (32) selon l'une des revendications 1, 2 ou 12, **caractérisé en ce que** l'au moins un rail de travail inférieur (42) et l'au moins un rail auxiliaire inférieur (43) des dispositifs de manipulation d'outil inférieurs (37) forment une unité modulaire inférieure (50) et l'unité modulaire inférieure (50) peut être déplacé le long de l'au moins une première piste de guidage inférieure (48) de la disposition de guidage longitudinal inférieure (47) au moyen d'un dispositif d'entraînement.

14. Système de stockage d'outils (32) selon l'une des revendications 1, 2, 12 ou 13, **caractérisé en ce que** le dispositif de rétraction inférieur (44) du dispositif de manipulation d'outil inférieur (37) peut être déplacé le long de l'au moins une deuxième piste de guidage inférieure (49) de la disposition de guidage longitudinal inférieure (47).

15. Système de stockage d'outils (32) selon l'une des revendications 1, 2, ou 12 à 14, **caractérisé en ce que**, entre l'unité modulaire inférieure (50) et le dispositif de rétraction inférieur (44), est prévu au moins un dispositif de couplage inférieur (51).

16. Système de stockage d'outils (32) selon l'une des revendications 1, 2, ou 12 à 15, **caractérisé en ce que** le dispositif de rétraction inférieur (44) comprend au moins un moyen d'arrêt inférieur (52) et le dispositif de rétraction inférieur (44) est maintenu de manière fixe par rapport à l'au moins une deuxième piste de guidage inférieure (49) de la disposition de guidage longitudinal inférieure (47) lorsque l'au moins un moyen d'arrêt inférieur (52) se trouve dans une position d'arrêt.

17. Système de stockage d'outils (32) selon l'une des revendications 1, 2, ou 12 à 16, **caractérisé en ce que** l'au moins un dispositif de poussée inférieur (45) est disposé sur l'unité modulaire inférieure (50) et comprend un élément de glissement inférieur (53) mobile dans la direction de l'extension longitudinale de l'au moins un rail de travail inférieur (42) ainsi que de l'au moins un rail auxiliaire inférieur (43) et, sur l'élément de glissement inférieur (53), est disposé au moins un taquet de réglage (54), cet au moins un taquet de réglage (54) pouvant être déplacé d'une position de travail emboîtée avec l'au moins une matrice de pliage (6) vers une position de repos déboîtée de l'au moins une matrice de pliage (6).

18. Système de stockage d'outils (32) selon l'une des revendications 1, 2, ou 12 à 17, **caractérisé en ce qu'**un curseur inférieur (58) est monté sur l'unité modulaire inférieure (50) de manière guidée dans une direction parallèle par rapport à l'au moins un rail de travail inférieur (42), ce curseur inférieur (58) pouvant être déplacé d'une position de déploiement dépassant de l'unité modulaire inférieure (50) en direction du magasin d'outils (30) vers une position de repos se trouvant à l'intérieur de l'unité modulaire inférieure (50).

19. Système de stockage d'outils (32) selon la revendication 17 ou 18, **caractérisé en ce qu'**un premier élément de couplage inférieur (59) est disposé sur l'élément de glissement inférieur (53), ce premier élément de couplage inférieur (59) pouvant être amené, avec un deuxième élément de couplage inférieur (60), disposé sur le curseur inférieur (58), dans une position de couplage emboîtée.

20. Système de stockage d'outils (32) selon l'une des revendications 1, 2, ou 12 à 19, **caractérisé en ce qu'**au moins un moyen de réglage inférieur (61), plus particulièrement une roue d'entraînement, une roue intermédiaire, une roue libre ou une roue directrice, est disposée sur l'au moins un rail de travail inférieur (42) et/ou l'au moins un rail auxiliaire inférieur (43) et **en ce que** l'au moins un moyen de réglage inférieur (61) est disposé dans une zone d'extrémité orientée vers le magasin d'outils (30) de l'au moins un rail de travail inférieur (42) et/ou de l'au moins un rail auxiliaire inférieur (43).

21. Installation de fabrication (1) pour le pliage à formes libres de pièces (2) à partir d'une tôle avec
- au moins une presse plieuse (3),
- un système de stockage d'outils (32), ce système de stockage d'outils (32) comprenant au moins un magasin d'outils (30) pour le logement d'au moins un outil de pliage (4) ainsi qu'au moins une unité de manipulation d'outil (31),
**caractérisée en ce que**
le système de stockage d'outils (32) est conçu selon l'une des revendications précédentes.

22. Procédé de manipulation d'au moins un outil de pliage (4) dans un système de stockage d'outils (32) d'une installation de fabrication (1), plus particulièrement pour le pliage à formes libres de pièces (2) à partir d'une tôle au moyen d'une presse plieuse (3), dans lequel
- au moins un magasin d'outils (30) est prévu pour le logement d'au moins un outil de pliage (4) comprenant au moins un poinçon de pliage (5) et au moins une matrice de pliage (6),
- le magasin d'outils (30) étant constitué d'au moins un rail de stockage supérieur (34) et d'au moins un rail de stockage inférieur (35) et l'au moins un rail de stockage supérieur (34) et l'au moins un rail de stockage inférieur (35) sont distants entre eux d'une distance verticale ainsi que disposés de manière fixe entre eux, dans lequel l'au moins un rail de stockage supérieur (34) définit un plan de stockage supérieur et l'au moins un rail de stockage inférieur (35) définit un plan de stockage inférieur,
- l'au moins un outil de pliage (4) est manipulé au moyen d'au moins une unité de manipulation d'outil (31) entre l'au moins un magasin d'outils (30) et au moins une unité de mise à disposition (55) avec au moins un rail de mise à disposition supérieur et/ou inférieur (56, 57), dans lequel l'unité de manipulation d'outil (31) est constitué d'au moins un dispositif de manipulation d'outil supérieur (36) et d'au moins un dispositif de manipulation d'outil inférieur (37), plus particulièrement à l'aide d'un système de stockage d'outils (32) selon l'une des revendications 1 à 20 et/ou d'une installation de fabrication (1) selon la revendication 21,
**caractérisé en ce que**
- l'au moins un dispositif de manipulation d'outil supérieur (36) est disposé au niveau d'une face frontale de l'au moins un rail de stockage supérieur (34) et l'au moins un dispositif de manipulation d'outil inférieur (37) est disposé au niveau d'une face frontale de l'au moins un rail de stockage inférieur (35),
- l'au moins un dispositif de manipulation d'outil supérieur (36) est constitué d'au moins un rail de travail supérieur (38) et d'au moins un rail auxiliaire supérieur (39) disposé latéralement par rapport à celui-ci et s'étendant parallèlement par rapport au rail de travail supérieur (38) et le dispositif de manipulation d'outil supérieur (36) comprend en outre au moins un dispositif de rétraction supérieur (40) pour au moins un poinçon de pliage (5) à loger ainsi qu'au moins un dispositif de poussée supérieur (41) pour au moins un poinçon de pliage (5) à sortir,
- l'au moins un dispositif de manipulation d'outil inférieur (37) est constitué d'au moins un rail de travail inférieur (42) et d'au moins un rail auxiliaire inférieur (43) disposé latéralement par rapport à celui-ci et s'étendant parallèlement par rapport au rail de travail inférieur (42) et le dispositif de manipulation d'outil inférieur (37) comprend en outre au moins un dispositif de rétraction inférieur (44) pour au moins une matrice de pliage (6) à loger ainsi qu'au moins un dispositif de poussée inférieur (45) pour au moins une matrice de pliage (6) à sortir,
- l'au moins un dispositif de manipulation d'outil supérieur (36) peut être déplacé parallèlement par rapport au plan de stockage supérieur ainsi que dans une direction perpendiculaire par rapport à l'extension longitudinale de l'au moins un rail de stockage supérieur (34) le long d'une disposition de guidage longitudinal supérieure (46) et
- l'au moins un dispositif de manipulation d'outil inférieur (37) peut être déplacé parallèlement par rapport au plan de stockage inférieur ainsi que dans une direction perpendiculaire par rapport à l'extension longitudinale de l'au moins un rail de stockage inférieur (35) le long d'une disposition de guidage longitudinal inférieure (47),
- l'assemblage d'un outil de pliage (4) à partir de plusieurs poinçons de pliage (5) et de plusieurs matrices de pliage (6) est effectué au moyen des dispositifs de manipulation d'outil (36, 37) de manière indépendante entre eux,
- au moyen de l'au moins un dispositif de manipulation d'outil supérieur (36), au moins un des poinçons de pliage (5) nécessaires et sélectionnés est déplacé d'un des rails de stockage supérieurs (34) vers son au moins un rail de travail supérieur (38), dans lequel au moins un poinçon de pliage (5) non nécessaire est déplacé du même rail de stockage supérieur (34) au moyen de l'au moins un dispositif de manipulation d'outil supérieur (36) vers son au moins un rail auxiliaire supérieur (39),
- et/ou, au moyen de l'au moins un dispositif de manipulation d'outil inférieur (37), au moins une des matrices de pliage (6) nécessaires et sélectionnées est déplacée d'un des rails de stockage inférieurs (35) vers son au moins un rail de travail inférieur (42), dans lequel au moins une matrice de pliage (6) non nécessaire est déplacé du même rail de stockage inférieur (35) au moyen de l'au moins un dispositif de manipulation d'outil inférieur (37) vers son au moins un rail auxiliaire inférieur (43).
